(19) **Europäisches Patentamt / European Patent Office / Office européen des brevets**

(11) **EP 4 776 714 A1**

(12) **EUROPEAN PATENT APPLICATION**
published in accordance with Art. 153(4) EPC

(43) Date of publication:
**15.07.2026 Bulletin 2026/29**

(21) Application number: **23951089.4**

(22) Date of filing: **04.09.2023**

(51) International Patent Classification (IPC):
***H04W 68/02*** (2009.01)

(52) Cooperative Patent Classification (CPC):
**H04W 68/02**

(86) International application number:
**PCT/CN2023/116823**

(87) International publication number:
**WO 2025/050260 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **ZHAO, Nande**
**Dongguan, Guangdong 523860 (CN)**

(74) Representative: **RGTH**
**Patentanwälte PartGmbB**
**Mönckebergstraße 11**
**20095 Hamburg (DE)**

(54) **WIRELESS COMMUNICATION METHODS, TERMINAL DEVICES AND NETWORK DEVICES**

(57) Provided are wireless communication methods, terminal devices, and network devices. A wireless communication method comprises: a first terminal device receives a first channel or first signal sent by a network device, the first channel or the first signal being used for providing an alarm message.

FIG. 3

## Description

### TECHNICAL FIELD

This application relates to the field of communications technologies, and more specifically, to a wireless communication method, a terminal device, and a network device.

### BACKGROUND

In some communication scenarios, a terminal device may fail to receive messages from a network device due to limited downlink coverage performance, resulting in a communication failure. For example, in a non-terrestrial communication network (non terrestrial network, NTN) system, limited transmit power of a satellite may result in a low downlink reception signal-to-noise ratio (signal-to-noise ratio, SNR), such that the terminal device may fail to receive messages transmitted by the satellite, resulting in a communication failure.

### SUMMARY

This application provides a wireless communication method, a terminal device, and a network device. The following describes the aspects related to this application.

According to a first aspect, a wireless communication method is provided, and includes: receiving, by a first terminal device, a first channel or a first signal transmitted by a network device, the first channel or the first signal being used to provide an alert message.

According to a second aspect, a wireless communication method is provided, and includes: transmitting, by a network device, a first channel or a first signal to a first terminal device, the first channel or the first signal being used to provide an alert message.

According to a third aspect, a terminal device is provided. The terminal device is a first terminal device, and the terminal device includes: a first receiving module, configured to receive a first channel or a first signal transmitted by a network device, the first channel or the first signal being used to provide an alert message.

According to a fourth aspect, a network device is provided, and includes: a first transmitting module, configured to transmit a first channel or a first signal to a first terminal device, the first channel or the first signal being used to provide an alert message.

According to a fifth aspect, a terminal device is provided, and includes a processor, a memory, and a communications interface. The memory is configured to store one or more computer programs. The processor is configured to invoke the computer program in the memory, to cause the terminal device to perform part or all of the steps in the method according to the first aspect.

According to a sixth aspect, a network device is provided, and includes: a processor, a memory, and a communications interface, where the memory is configured to store one or more computer programs, and the processor is configured to invoke the computer program in the memory to cause the network device to execute part or all of the steps in the method according to the second aspect.

According to a seventh aspect, an embodiment of this application provides a communications system, where the system includes the foregoing terminal device and/or the foregoing network device. In another possible design, the system may further include another device that interacts with the terminal device or the network device in the solutions provided in embodiments of this application.

According to an eighth aspect, an embodiment of this application provides a computer-readable storage medium. The computer-readable storage medium stores a computer program, and the computer program causes a computer to execute part or all of the steps of the methods according to the foregoing aspects.

According to a ninth aspect, an embodiment of this application provides a computer program product. The computer program product includes a non-transitory computer-readable storage medium that stores a computer program, and the computer program is operable to cause a computer to execute part or all of the steps of the methods according to the foregoing aspects. In some implementations, the computer program product may be a software installation package.

According to a tenth aspect, an embodiment of this application provides a chip. The chip includes a memory and a processor. The processor may invoke a computer program from the memory and run the computer program, to implement part or all of the steps described in the methods according to the foregoing aspects.

In embodiments of this application, a network device may provide an alert message to a first terminal device by using a first channel or a first signal, which is beneficial for the first terminal device to determine subsequent communication behavior (for example, whether to move to a location with better signal reception quality to communicate with the network device) based on the alert message, thereby facilitating increasing a communication success rate.

## BRIEF DESCRIPTION OF DRAWINGS

FIG. 1A is an example diagram of a system architecture of a wireless communications system to which embodiments of this application are applicable.

FIG. 1B is another example diagram of a system architecture of a wireless communications system to which embodiments of this application are applicable.

FIG. 1C is still another example diagram of a system architecture of a wireless communications system to which embodiments of this application are applicable.

FIG. 2 is an example diagram of a location of a PF in a DRX cycle for paging and a location of a PO in the PF.

FIG. 3 is a schematic flowchart of a wireless communication method according to an embodiment of this application.

FIG. 4 is a schematic flowchart of a wireless communication method according to another embodiment of this application.

FIG. 5 is a schematic flowchart of a wireless communication method according to still another embodiment of this application.

FIG. 6 is a schematic flowchart of a wireless communication method according to still another embodiment of this application.

FIG. 7 is a schematic flowchart of a wireless communication method according to still another embodiment of this application.

FIG. 8 is a schematic flowchart of a wireless communication method according to still another embodiment of this application.

FIG. 9 is an example diagram of a possible implementation of determining a time domain location of a first occasion, according to an embodiment of this application.

FIG. 10 is a schematic flowchart of a wireless communication method according to still another embodiment of this application.

FIG. 11 is a schematic flowchart of a wireless communication method according to still another embodiment of this application.

FIG. 12 is a schematic structural diagram of a terminal device according to an embodiment of this application.

FIG. 13 is a schematic structural diagram of a network device according to an embodiment of this application.

FIG. 14 is a schematic structural diagram of a communications apparatus according to an embodiment of this application.

## DESCRIPTION OF EMBODIMENTS

### Communications system architecture

The technical solutions in embodiments of this application may be applied to various communications systems, for example, a global system for mobile communications (global system of mobile communication, GSM), a code-division multiple access (code division multiple access, CDMA) system, a wideband code-division multiple access (wideband code division multiple access, WCDMA) system, general packet radio service (general packet radio service, GPRS), a long-term evolution (long term evolution, LTE) system, an advanced long-term evolution (advanced long term evolution, LTE-A) system, a new radio (new radio, NR) system, an evolved system of an NR system, an LTE-based access to unlicensed spectrum (LTE-based access to unlicensed spectrum, LTE-U) system, an NR-based access to unlicensed spectrum (NR-based access to unlicensed spectrum, NR-U) system, an NTN system, a universal mobile telecommunications system (universal mobile telecommunication system, UMTS), a wireless local area network (wireless local area networks, WLAN), wireless fidelity (wireless fidelity, WiFi), a fifth-generation (5th-generation, 5G) system, or another communications system, for example, a future communications system such as a sixth-generation mobile communications system or a satellite communications system.

Generally, a conventional communications system supports a limited quantity of connections, which is easy to implement. However, with the development of communications technologies, a mobile communications system not only supports conventional communication, but also supports, for example, device-to-device (device to device, D2D) communication, machine-to-machine (machine to machine, M2M) communication, machine type communication (machine type communication, MTC), vehicle-to-vehicle (vehicle to vehicle, V2V) communication, or vehicle-to-everything (vehicle to everything, V2X) communication, and the like. Embodiments of this application may also be applied to these communications systems.

The communications system in embodiments of this application may be applied to a carrier aggregation (carrier aggregation, CA) scenario, a dual connectivity (dual connectivity, DC) scenario, or a standalone (standalone, SA) networking scenario.

The communications system in embodiments of this application may be applied to unlicensed spectrum, and the unlicensed spectrum may also be considered as shared spectrum. Alternatively, the communications system in embodiments of this application may be applied to licensed spectrum, and the licensed spectrum may also be considered as dedicated spectrum.

Embodiments of this application may be applied to an NTN system, or may be applied to a terrestrial communication network (terrestrial network, TN) system. By way of example and without limitation, the NTN system includes an NR-based NTN system and an IoT-based NTN system.

Embodiments of this application are described with reference to a network device and a terminal device. The terminal device may also be referred to as a user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, a user apparatus or the like.

In embodiments of this application, the terminal device may be a STATION (STATION, ST) in a WLAN, or may be a cellular phone, a cordless phone, a session initiation protocol (session initiation protocol, SIP) phone, a wireless local loop (wireless local loop, WLL) station, a personal digital assistant (personal digital assistant, PDA) device, a handheld device with a wireless communication function, a computing device or another processing device connected to a wireless modem, a vehicle-mounted device, a wearable device, a next-generation communications system such as a terminal device in an NR network, or a terminal device in a future evolved public land mobile network (public land mobile network, PLMN) network.

In embodiments of this application, the terminal device may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like.

Optionally, the UE may be configured to function as a base station. For example, the UE may function as a scheduling entity, which provides a sidelink signal between UEs in V2X, D2D, or the like. For example, a cellular phone and a vehicle communicate with each other through a sidelink signal. A cellular phone and a smart home device communicate with each other, without relaying a communication signal through a base station.

By way of example and without limitation, in embodiments of this application, the terminal device may also be a wearable device. The wearable device may also be referred to as an intelligent wearable device, and is a general term for wearable devices such as glasses, gloves, watches, clothes, and shoes that are intelligently designed and developed based on daily wearing by using a wearable technology. The wearable device is a portable device that can be directly worn or integrated into clothes or accessories of a user. In addition to being a hardware device, the wearable device can also realize various functions through software support, data interaction, and cloud interaction. In a broad sense, smart wearable devices include a full-featured and large-sized device that can provide full or partial functions without relying on a smart phone, for example, a smart watch or smart glasses, and devices that focus on only a specific type of application function and need to cooperate with another device such as a smart phone for use, for example, various smart bracelets and smart jewelry for physical sign monitoring.

In embodiments of this application, the terminal device may be deployed on land, including being indoors or outdoors, handheld, wearable, or vehicle-mounted. The terminal device may also be deployed on water (for example, on a ship), or may be deployed in the air (for example, on an airplane, an air balloon, or a satellite). In embodiments of this application, the terminal device may be stationary or mobile.

The network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover the following various names, or may be replaced with the following names, such as a Node B (NodeB), an evolved NodeB (evolved NodeB, eNB), a next-generation NodeB (next generation NodeB, gNB), a relay station, an access point, a transmitting and receiving point (transmitting and receiving point, TRP), a transmitting point (transmitting point, TP), a master eNodeB MeNB, a secondary eNodeB SeNB, a multi-standard radio (MSR) node, a home eNodeB, a network controller, an access node, a radio node, an access point (access piont, AP), a transmission node, a transceiver node, a baseband unit (base band unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, vehicle-to-everything (vehicle-to-everything, V2X), and machine-to-machine (machine-to-machine, M2M) communications, a network-side device in a 6G network, a device that functions as a base station in a future communications system, or the like. The base station may support networks of a same access technology or different access technologies. A specific technology and a specific device used by the network device are not limited in embodiments of this application.

The base station may be stationary or mobile. For example, a helicopter or an unmanned aerial vehicle may be configured to function as a mobile base station, and one or more cells may move according to a location of the mobile base station. In another example, a helicopter or an unmanned aerial vehicle may be configured to serve as a device in communication with another base station.

In some deployments, the network device in embodiments of this application may be a CU or a DU, or the network device includes a CU and a DU. The gNB may further include an AAU.

The network device and the terminal device may be deployed on land, including being deployed indoors or outdoors, handheld, or vehicle-mounted, may be deployed on a water surface, or may be deployed on a plane, a balloon, or a satellite in the air. In embodiments of this application, a scenario in which the network device and the terminal device are located is not limited.

By way of example rather than limitation, in embodiments of this application, the network device may have a mobility characteristic. For example, the network device may be a mobile device. In some embodiments of this application, the network device may be a satellite or a balloon station. For example, the satellite may be a low earth orbit (low earth orbit, LEO) satellite, a medium earth orbit (medium earth orbit, MEO) satellite, a geostationary earth orbit (geostationary earth orbit, GEO) satellite, a high elliptical orbit (High Elliptical Orbit, HEO) satellite, or the like. In some embodiments of this application, the network device may alternatively be a base station located on land, water, or the like.

In embodiments of this application, the network device may provide a service for a cell, and the terminal device communicates with the network device by using a transmission resource (for example, a frequency domain resource or a spectrum resource) used by the cell. The cell may be a cell corresponding to the network device (for example, a base station). The cell may belong to a macro base station or belong to a base station corresponding to a small cell (small cell). The small cell herein may include a metro cell (metro cell), a micro cell (micro cell), a pico cell (pico cell), a femto cell (femto cell), or the like. These small cells feature small coverage and low transmit power, and are suitable for providing a high-speed data transmission service.

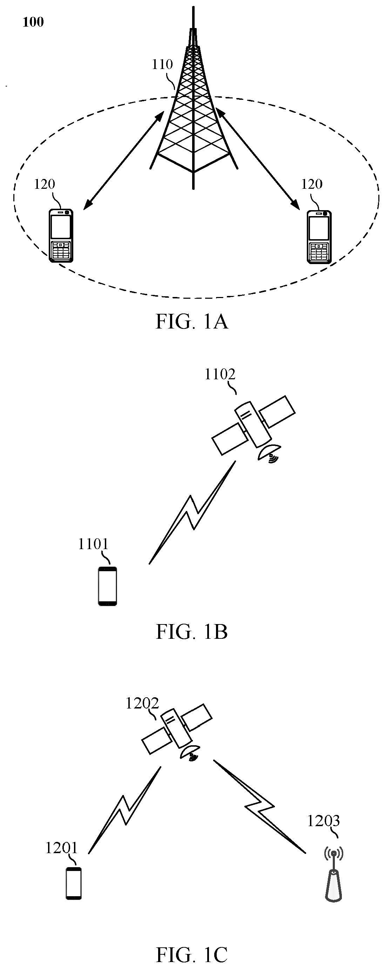

Exemplarily, FIG. 1A is a schematic diagram of an architecture of a communications system according to an embodiment of this application. As shown in FIG. 1A, the communications system 100 may include a network device 110, and the network device 110 may be a device that communicates with a terminal device 120 (or referred to as a communications terminal or a terminal). The network device 110 may provide communication coverage for a specific geographic area, and may communicate with a terminal device within the coverage.

FIG. 1A exemplarily shows one network device and two terminal devices. In some embodiments of this application, the communications system 100 may include a plurality of network devices, and another quantity of terminal devices may be included within coverage of each network device, which is not limited in embodiments of this application.

Exemplarily, FIG. 1B is a schematic diagram of an architecture of another communications system according to an embodiment of this application. Referring to FIG. 1B, a terminal device 1101 and a satellite 1102 are included, and wireless communication may be performed between the terminal device 1101 and the satellite 1102. A network formed between the terminal device 1101 and the satellite 1102 may also be referred to as an NTN. In the architecture of the communications system shown in FIG. 1B, the satellite 1102 may have a function of a base station, and direct communication may be performed between the terminal device 1101 and the satellite 1102. Under this system architecture, the satellite 1102 may be referred to as a network device. In some embodiments of this application, the communications system may include a plurality of network devices 1102, and another quantity of terminal devices may be included within coverage of each network device 1102, which is not limited in embodiments of this application.

Exemplarily, FIG. 1C is a schematic diagram of an architecture of another communications system according to an embodiment of this application. Referring to FIG. 1C, a terminal device 1201, a satellite 1202, and a base station 1203 are included, wireless communication may be performed between the terminal device 1201 and the satellite 1202, and communication may be performed between the satellite 1202 and the base station 1203. A network formed between the terminal device 1201, the satellite 1202, and the base station 1203 may also be referred to as an NTN. In the architecture of the communications system shown in FIG. 1C, the satellite 1202 may not have a function of a base station, and communication between the terminal device 1201 and the base station 1203 is required to be forwarded by using the satellite 1202. Under such a system architecture, the base station 1203 may be referred to as a network device. In some embodiments of this application, the communications system may include a plurality of network devices 1203, and another quantity of terminal devices may be included within coverage of each network device 1203, which is not limited in embodiments of this application.

It should be noted that FIG. 1A to FIG. 1C are merely examples of systems to which this application is applicable. Certainly, the methods shown in embodiments of this application may also be applied to another system, such as a 5G communications system or an LTE communications system. This is not specifically limited in embodiments of this application.

In some embodiments of this application, the wireless communications systems shown in FIG. 1A to FIG. 1C may further include another network entity such as a mobility management entity (mobility management entity, MME) or an access and mobility management function (access and mobility management function, AMF), which is not limited in embodiments of this application.

It should be understood that in embodiments of this application, a device having a communication function in a network or a system may be referred to as a communications device. The communications system 100 shown in FIG. 1A is used as an example. The communications device may include a network device 110 and a terminal device 120 that have a communication function. The network device 110 and the terminal device 120 may be the foregoing specific devices, and details are not described herein again. The communications device may further include another device in the communications system 100, such as a network controller or a mobility management entity. This is not limited in embodiments of this application.

## Paging mechanism/Paging procedure

In some communications systems (such as an NR system and an LTE system), a network device may transmit paging to a terminal device in a radio resource control (radio resource control, RRC) idle state, an RRC inactive state, or an RRC connected state. The paging procedure may be triggered by a core network or a base station. The paging procedure may be used by a network to transmit a paging message (paging message, also referred to as a paging request) to a terminal device in the RRC idle state or the RRC inactive state, to page the terminal device, or the paging procedure may be used by the network to notify a terminal device of system information update, or the paging procedure may be used by the network to instruct a terminal device to receive alert information transmitted by an earthquake and tsunami warning system (earthquake and tsunami warning system, ETWS) and/or a public warning system (commercial mobile alert system, CMAS). In some embodiments, the network may notify the terminal device of one or more of system information update, an ETWS message, or a CMAS message by using a short message (short message). In some embodiments, the terminal device that receives the system information update, the ETWS message, or the CMAS message may be a terminal device in any RRC state, for example, a terminal device in the RRC connected state.

The paging may include a physical downlink control channel (physical downlink control channel, PDCCH) scrambled with a paging radio network temporary identifier (paging radio network temporary identifier, P-RNTI) and a physical downlink shared channel (physical downlink shared channel, PDSCH) scheduled by the PDCCH. The paging message may be transmitted in the PDSCH, or in other words, the paging message may be carried by the PDSCH. The short message may be transmitted in the PDCCH, or in other words, the short message may be carried by the PDCCH. For example, the short message may be 8-bit information in the PDCCH.

In some embodiments, the paging message may be scheduled by using downlink control information (downlink control information, DCI) with cyclic redundancy check (cyclic redundancy check, CRC) scrambled by a P-RNTI, for example, scheduled by using DCI 1_0 with CRC scrambled by a P-RNTI.

For a terminal device in the RRC idle state or the RRC inactive state, there is no other data transmission between the terminal device and the network device. Therefore, to save power of the terminal device, the terminal device may discontinuously monitor a paging channel, that is, the terminal device may use a paging discontinuous reception (discontinuous reception, DRX) mechanism, so as to reduce power consumption. In the paging DRX mechanism, the terminal device is only required to monitor a paging channel or receive a paging message in one paging occasion (paging occasion, PO) in each DRX cycle (cycle) for paging. In some embodiments, the DRX cycle for paging may also be referred to as a paging cycle, a paging DRX cycle, or the like.

A DRX cycle for paging may be jointly determined by a common cycle in a system broadcast and a dedicated cycle configured in higher layer signalling (for example, non-access stratum (non-access stratum, NAS) signalling). For example, the terminal device uses a smaller cycle of the two as a DRX cycle for paging.

A PO indicates an instant at which a paging message may occur. A PO consists of a plurality of PDCCH monitoring occasions (monitoring occasion) in paging search space (paging search space), or in other words, a PO is a set of PDCCH monitoring occasions that may include a plurality of time units (such as subframes or orthogonal frequency division multiplexing (orthogonal frequency division multiplexing, OFDM) symbols) used for carrying paging DCI.

The PO may be determined by the terminal device based on a received paging parameter. For example, before receiving a paging message, the terminal device may first receive the paging parameter by using a system message, and then determine the PO with reference to a UE_ID of the terminal device. In some embodiments, the terminal device may alternatively determine a frame number of a paging frame (paging frame, PF) based on a received paging parameter. The PF refers to a radio frame (for example, the radio frame may be fixed at 10 milliseconds). The radio frame may include a plurality of POs or a start location of a plurality of POs. In other words, the PF indicates a frame number of a system frame in which a paging message is supposed to occur. Based on this, the terminal device may monitor, in a PO of the PF, a PDCCH scrambled by a P-RNTI, to receive paging indication information, and finally receive a paging message based on the paging indication information.

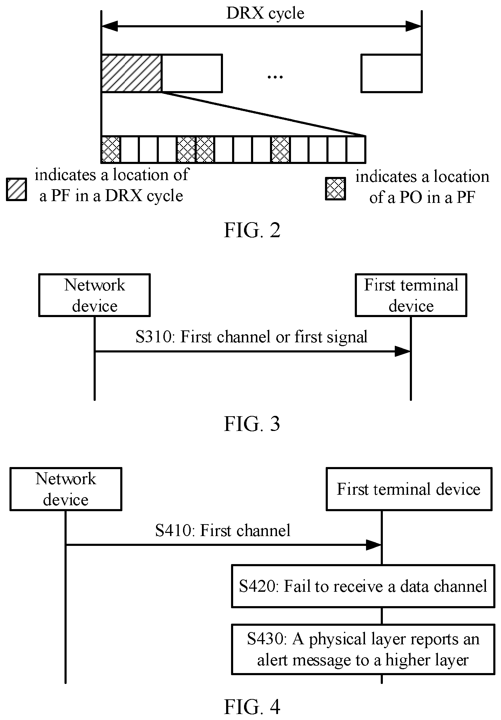

FIG. 2 shows a location of a PF in a DRX cycle for paging and a location of a PO in the PF. As shown in FIG. 2, the PF is located in the DRX cycle for paging, one PF may include one or more POs, and the plurality of POs may correspond to different terminal devices. In other words, from a perspective of a network device, one DRX cycle for paging may include a plurality of POs. However, for a terminal device, the terminal device is only required to monitor a PO for the terminal device in a DRX cycle for paging.

As described above, a terminal may calculate a PF and a PO based on a UE_ID (that is, a location at which the terminal device monitors the PO is related to the ID of the terminal device). In some implementations, a system frame corresponding to a system frame number (system frame number, SFN) that meets a formula $(SFN + PF\_offset) \bmod T = (T \operatorname{div} N) * (UE\_ID \bmod N)$ may be used as one PF. In the PF, an index (index) $i\_s$ of a PO corresponding to the terminal device in the PF may be calculated according to a formula $i\_s = \operatorname{floor} (UE\_ID/N) \bmod Ns$. Herein, T denotes a DRX cycle for receiving paging by the terminal device; UE_ID is used to identify the terminal device; N denotes a quantity of PFs included in the DRX cycle for paging (that is, a total quantity of paging frames in T); and Ns denotes a quantity of POs included in one PF. PF_offset is used to determine a time domain offset (frame offset) of a PF. Div denotes an integer division operation, mod denotes a modulo operation, and floor() denotes a floor operation.

It should be noted that, for one terminal device, a network broadcasts a default DRX cycle. If a higher layer (for example, RRC) configures a DRX cycle dedicated to the terminal device for the terminal device, a smaller DRX cycle in the DRX cycle broadcast by the network and the DRX cycle configured by the higher layer may be selected as T. That is, $T = \min(T\_UE, T\_sib)$, where T_sib represents the default DRX cycle indicated in a system message, and T_UE represents the DRX cycle configured for the terminal. Certainly, for a terminal device for which T_UE is not configured, the default DRX cycle broadcast by the network may be used as T, that is, $T = T\_sib$.

It should be further noted that in some embodiments, the UE_ID may be calculated by using a formula $UE\_ID = (5G\text{-}S\text{-}TMSI \bmod 1024)$, where 5G-S-TMSI represents a temporary mobile subscriber identity (temporary mobile subscriber identity, TMSI) allocated by a communications system to the terminal device.

The terminal device may calculate, according to the foregoing formulas, a PF and an index of a PO to monitor. Further, the terminal device may also obtain a quantity of PDCCH monitoring occasions in the PO and a start location of the first PDCCH monitoring occasion in the PO. For example, the quantity of the PDCCH monitoring occasions in the PO may be calculated according to a formula, and the start location of the first PDCCH monitoring occasion in the PO may be obtained based on a configuration parameter transmitted by the network (for example, a configuration parameter configured by the network by using higher layer signalling). After obtaining the foregoing information or the foregoing parameter, the terminal device may receive a paging message based on the determined PO.

For example, a PDCCH monitoring occasion for paging may be determined based on the two parameters: *pagingSearchSpace and firstPDCCH-MonitoringOccasionOfPO.*

In some implementations, if *pagingSearchSpace* is configured as *SearchSpaceId* = 0, a PDCCH monitoring occasion for paging may be the same as a monitoring occasion for remaining minimum system information (remaining minimum system information, RMSI). In this case, Ns is 1 or 2. For Ns = 1, there is only one PO in the PF, and the PO starts from the first PDCCH monitoring occasion for paging. For Ns = 2, the PO is located in the first half-frame ($i\_s = 0$) or the second half-frame ($i\_s = 1$) of the PF.

*If pagingSearchSpace* is configured as *SearchSpaceId* being not equal to 0, the terminal device monitors an $(i\_s+1)^{th}$ PO. The PO may include a set of S*X consecutive PDCCH monitoring occasions, where S denotes a quantity of synchronization signal blocks (synchronization signal block, SSB) broadcast or actually transmitted by the network device in a master information block (master information block, MIB), and X denotes a quantity of PDCCH monitoring occasions corresponding to each SSB. An $(x*S+K)^{th}$ PDCCH monitoring occasion for paging in the PO corresponds to a $K^{th}$ SSB transmitted, where x = 0, 1, ..., X-1, and K = 1, 2, ..., S. PDCCH monitoring occasions for paging in a PF are sequentially numbered from zero, starting from the first PDCCH monitoring occasion for paging. *If firstPDCCH-MonitoringOccasionOfPO* is configured, a number of a start PDCCH monitoring occasion in an $(i\_s+1)^{th}$ PO is an $(i\_s+1)^{th}$ value *of firstPDCCH-MonitoringOccasionOfPO.* Otherwise, the number is $i\_s*S*X$.

## Paging false alarm (paging false alarm)

It may be learned from the foregoing manner in which the UE determines the PO that, determining of the PO is related to the UE_ID, the PF, and the total quantity of POs. In a case in which a system includes a relatively large quantity of terminal devices, a network device cannot allocate all of the terminal devices to different POs. As a result, a plurality of terminal devices may correspond to one PO. In this case, if the network device intends to page a specific terminal device in the PO, other terminal devices that originally have no paging messages may perform additional reception, which mainly includes receiving a PDCCH and a corresponding PDSCH. For these terminal devices that originally have no paging messages, such false paging is a paging false alarm.

## Enhanced paging mechanism

Based on this, to further optimize an energy saving manner of a terminal device, it is necessary to design an enhanced paging mechanism to reduce unnecessary paging reception (that is, reduce a quantity of paging false alarms) of the terminal device. Based on this, a paging early indication (paging early indication, PEI) is discussed, to further reduce power consumption of the terminal device. For example, terminal devices in an RRC idle state and an RRC inactive state may use the PEI to reduce power consumption.

In a solution based on the PEI, a network device transmits the PEI to the terminal device before a PO in each DRX cycle for paging arrives, to instruct the terminal device whether to receive, in the PO, a PDCCH that carries paging indication information. That is, the terminal device may determine, based on the received PEI, whether to normally monitor a paging message in the corresponding PO or to skip monitoring the paging message. The terminal device is awakened only when the PEI indicates that the terminal device is required to receive a PDCCH in a PO. Otherwise, if the PEI indicates that the terminal device is not required to receive the PDCCH in the PO, the terminal device maintains a sleep state, to reduce power consumption.

In some implementations, if the network device provides a PEI configuration in a system message, terminal devices in the RRC idle state or RRC inactive state may monitor the PEI to determine whether the terminal device is required to monitor a paging message.

In some implementations, the PEI may be carried in DCI with CRC scrambled by a PEI-RNTI. For example, the PEI may be carried in DCI 2_7 with CRC scrambled by a PEI-RNTI.

The terminal device may monitor a PEI occasion (PEI occasion, PEI-O) in each DRX cycle. In some implementations, the PEI-O is a set of PDCCH monitoring occasions, and may include a plurality of time units (for example, subframes or OFDM symbols) used for carrying the PEI. In some implementations, one PEI-O may be associated with $N_{PO}^{PEI}$ POs in one or two PFs, and a maximum quantity of PFs associated with one PEI-O is 2.

In some implementations, a time domain location of a PEI-O may be determined based on a reference point and an offset. For example, first, the first PF among all PFs associated with the PEI-O may be subjected to a frame-level shift, as a reference frame, and a starting point of the reference frame may be defined as the reference point. Then, the first PDCCH monitoring occasion in the PEI-O may be determined based on the reference point and a symbol-level offset.

For example, a PDCCH monitoring occasion for a PEI may be determined based on a parameter *pei-SearchSpace.*

In some implementations, if *pei-SearchSpace* is configured as *SearchSpaceId* = 0, a PDCCH monitoring occasion for a PEI may be the same as a monitoring occasion for an RMSI. If *pei-SearchSpace* is configured as *SearchSpaceId* being not equal to 0, the terminal device monitors a PEI-O based on a search space indicated by *SearchSpaceId.* It should be noted that the terminal device may still determine the first PDCCH monitoring occasion in the PEI-O based on the reference point and the symbol-level offset.

A PEI-O may include a set of S*X consecutive PDCCH monitoring occasions, where S denotes a quantity of SSBs broadcast or actually transmitted by the network device in a master information block MIB, and X denotes a quantity of PDCCH monitoring occasions corresponding to each SSB. An (x*S+K)th PDCCH monitoring occasion for the PEI in the PEI-O corresponds to a Kth SSB transmitted, where x = 0, 1, ..., X-1, and K = 1, 2, ..., S. PDCCH monitoring occasions for the PEI in the PEI-O are sequentially numbered from zero, starting from the first PDCCH monitoring occasion for the PEI.

In some implementations, when the terminal device detects the PEI in the PEI-O, the terminal device may not monitor a subsequent monitoring occasion associated with a same PEI-O.

In some implementations, a paging indication field of the PEI may be used to indicate whether a terminal subgroup (terminal device group) is required to monitor a paging message. For example, the PEI is carried in DCI 2_7 with CRC scrambled by a PEI-RNTI. A paging indication field of DCI 2_7 may include $N_{PO}^{PEI} * N_{SG}^{PO}$ bits, where $N_{SG}^{PO}$ denotes a quantity of terminal subgroups within each PO, that is, each bit in the paging indication field may indicate one terminal subgroup within the PO. Based on this, for a subgroup index $i_{SG}$, $0 \leq i_{SG} < N_{SG}^{PO}$, the terminal device may determine, based on a value of an $(i_{PO} * N_{SG}^{PO} + i_{SG})^{\text{th}}$ bit in the paging indication field, whether to monitor a corresponding PO, where $i_{PO}$ indicates an index of the PO, and

$$i_{PO} = \left( (UE\_ID \ mod \ N) * N_s + i\_s \right) mod \ N_{PO}^{PEI}$$

. In some embodiments, when a value of an

$(i_{PO} * N_{SG}^{PO} + i_{SG})^{th}$ bit in the paging indication field is "1", the terminal device monitors a corresponding PO; otherwise, the terminal device may not monitor the PO.

In some communication scenarios, a terminal device may fail to receive messages from a network device due to limited downlink coverage performance, resulting in a communication failure. For example, in an NTN system, limited transmit power of a satellite may result in a low downlink reception SNR, and further result in that the terminal device may fail to receive messages transmitted by the satellite, resulting in a communication failure.

In view of the foregoing problems, embodiments of this application provide a wireless communication method, a terminal device, and a network device, so that the network device can provide an alert message to the terminal device, thereby being beneficial for the terminal device to determine subsequent communication behavior based on the alert message, and improving a communication success rate.

The method embodiments of this application are described below with reference to the accompanying drawings.

FIG. 3 is a schematic flowchart of a wireless communication method according to an embodiment of this application. The method illustrated in FIG. 3 is described from a perspective of interaction between a first terminal device and a network device. The first terminal device and the network device may be respectively, for example, the terminal device 120 and the network device 110 shown in FIG. 1A, or the terminal device 1101 and the network device 1102 shown in FIG. 1B, or the terminal device 1201 and the network device 1203 shown in FIG. 1C.

The method shown in FIG. 3 may include step S310. The following describes the step.

In step S310, the first terminal device receives a first channel or a first signal transmitted by the network device.

The first channel or the first signal may be used to provide an alert message (or referred to as alert information), or in other words, the first channel or the first signal may be used by the network device to provide the alert message to one or more terminal devices.

In embodiments of this application, the network device may provide the alert message to one or more terminal devices, and the first terminal device may be any one of the one or more terminal devices, which is not limited in embodiments of this application.

In some embodiments, the alert message may be used for a terminal device (for example, the first terminal device) to achieve better communication with the network device.

In some embodiments, the alert message may be used to alert the terminal device to that its current signal reception quality is poor.

In some embodiments, the alert message may instruct the terminal device to move to achieve better communication with the network device.

In an implementation, the alert message may be carried in one bit to instruct the terminal device whether to move. For example, when a value of the alert message is "1", it may instruct the terminal device to move, so that the terminal device moves, based on the alert message, to another location (for example, a location with better signal reception quality) for communication with the network device. When the value of the alert message is "0", it may instruct the terminal device not to move, so that the terminal device may communicate with the network device at a current location. However, embodiments of this application are not limited thereto. For example, when a value of the alert message is "0", it may instruct the terminal device to move, so that the terminal device moves, based on the alert message, to another location (for example, a location with better signal reception quality) for communication with the network device. When the value of the alert message is "1", it may instruct the terminal device not to move, so that the terminal device may communicate with the network device at a current location.

In another implementation, the alert message may be carried in a plurality of bits to instruct the terminal device whether to move. For example, when a value of the alert message is "Yes", "Move", or other related information, the alert message may instruct the terminal device to move, so that the terminal device moves, based on the alert message, to another location (for example, a location with better signal reception quality) for communication with the network device; and when the value of the alert message is "No", "Do not move", or other related information, the alert message may instruct the terminal device not to move, so that the terminal device may communicate with the network device at a current location.

In some embodiments, the alert message may instruct the terminal device to move to a location with better signal reception quality, to achieve better communication with the network device. In other words, in some embodiments, the alert message may instruct the terminal device to move from a first location to a second location, where signal reception quality of the terminal device at the second location is higher than signal reception quality of the terminal device at the first location.

In an implementation, the alert message may be carried in a plurality of bits to instruct the terminal device whether to move to a location with better signal reception quality. For example, when a value of the alert message is "Move", "Move to a location with better signal quality", or other related information, the alert message may instruct the terminal device to move, so that the terminal device moves to a location with better signal reception quality for communication with the network device. When the value of the alert message is "No", "Do not move", or other related information, the alert message may instruct the terminal device not to move, so that the terminal device may communicate with the network device at a current location.

This is because the applicant has found that, in some communication scenarios with limited downlink coverage performance, if the terminal device is at an unfavorable signal reception location (for example, there are obstructions in a surrounding environment), a failure rate of communication between the terminal device and the network device increases. However, a current communications system (for example, an NR system) does not support the network device in providing an alert message to a terminal device with poor signal reception quality. Therefore, in embodiments of this application, an alert message may be provided to the terminal device by using the first channel or the first signal, so that the terminal device determines subsequent communication behavior based on the alert message, thereby facilitating increasing a communication success rate. For example, the terminal device may determine, based on the alert message, whether to move (for example, whether to move to a location with better signal reception quality), to achieve better communication with the network device.

In some embodiments, the terminal device communicating with the network device may include the terminal device receiving a paging message transmitted by the network device. For example, the terminal device may move, based on the alert message, to a location with better signal reception quality, to successfully receive a paging message, thereby ensuring successful paging.

In some embodiments, the terminal device communicating with the network device may include the terminal device receiving a system message transmitted by the network device. For example, the terminal device may move, based on the alert message, to a location with better signal reception quality, to successfully receive a system message, so as to perform one or more of the following: updating a system message, or receiving an alert message transmitted by the ETWS and/or the CMAS. In other words, in a case in which the network device transmits a short message to instruct the terminal device to perform one or more of the following: updating a system message, or receiving an alert message transmitted by the ETWS and/or the CMAS, a communication success rate can be increased by using the alert message.

As mentioned above, the alert message is provided by using the first channel or the first signal, and the following describes the first channel or the first signal in detail.

In some embodiments, the first channel may be a PDCCH. For example, the first channel may be a PDCCH used for scheduling a data channel. Alternatively, the first channel may be a PDCCH specifically used for carrying (providing) an alert message.

In some embodiments, the first signal may be a reference signal. In other words, the alert message may be carried in the reference signal. For example, the alert message may be carried in a new reference signal, and the new reference signal may be specifically used for carrying the alert message. Alternatively, the alert message may be carried in an existing reference signal, for example, a first sequence may be added to a reference signal, such as an SSB, to carry the alert message and so on.

The following provides several feasible implementations of the first channel or the first signal with reference to Embodiment 1 to Embodiment 3.

## Embodiment 1: The first channel is a PDCCH used for scheduling a data channel

In Embodiment 1, the first channel is a PDCCH used for scheduling a data channel (for example, a PDSCH). In other words, in embodiments of this application, the PDCCH used for scheduling the data channel may be used as the first channel (that is, an alert channel). In this case, in embodiments of this application, an existing PDCCH may be used to provide an alert message to the terminal device, which generates minimal impact on an existing system.

In some embodiments, considering that a data channel is generally scheduled by using a PDCCH and that the PDCCH typically has better coverage performance than the data channel, the PDCCH for scheduling the data channel may be used as the first channel to provide an alert message to the terminal device.

In some embodiments, the first channel may be scrambled with a P-RNTI.

In some embodiments, after receiving the first channel or the alert message transmitted by the network device, a physical layer of the terminal device may report the alert message to a higher layer of the terminal device. In this way, the higher layer of the terminal device may determine subsequent behavior of the terminal device based on the alert message. For example, the alert message is used to instruct the terminal device to move or move to a location with better signal reception quality. In this case, the higher layer of the terminal device may instruct, based on indication of the alert message, the terminal device to move to a location with better signal reception quality, so as to achieve better communication with the network device subsequently.

For example, if the terminal device receives the PDCCH (that is, the first channel) for scheduling the data channel, but the terminal device is at a location with poor signal reception quality, the terminal device fails to further receive or transmit the data channel. In this case, the physical layer of the terminal device may report the alert message to the higher layer, so as to instruct the terminal device to move to a location with better signal reception quality, thereby facilitating increasing a success rate of the terminal device in further receiving or transmitting a data channel.

In embodiments of this application, no specific limitation is imposed on the data channel mentioned above. The data channel may be a channel carrying any data or information. For example, the data channel may be a PDSCH carrying any data or information. For example, in some embodiments, the data channel may carry a paging message. In some embodiments, the data channel may carry a system message.

With reference to FIG. 4, the following provides an example of a procedure in which a terminal device (for example, the first terminal device) receives the first channel and reports the alert message.

FIG. 4 is a schematic flowchart of receiving the first channel and reporting the alert message by the first terminal device. The method illustrated in FIG. 4 may include step S410 to step S430.

In step S410, the first terminal device receives the first channel. The first channel may be used to provide the alert message.

In some embodiments, the first channel may be a PDCCH for scheduling a paging message.

In some embodiments, the first channel may be a PDCCH for carrying a short message.

In some embodiments, the first channel may be a PDCCH for scheduling a system message.

In some embodiments, the first channel may be a PDCCH for scheduling user data.

In some embodiments, the first channel may be scrambled with a P-RNTI. For example, the first channel may be a PDCCH that carries DCI 1_0 with CRC scrambled by a P-RNTI.

For other content related to the first channel and the alert message, reference may be made to the foregoing description, and details are not repeated herein.

In step S420, the first terminal device fails to receive the data channel.

In some embodiments, after receiving the first channel, the first terminal device may fail to further receive the data channel since the first terminal device is at a location with poor signal reception quality or due to another reason.

In some embodiments, the data channel may carry a paging message.

In some embodiments, the data channel may carry a system message.

In some embodiments, the data channel may carry user data.

In step S430, a physical layer of the first terminal device reports the alert message to a higher layer of the first terminal device.

In some embodiments, the first terminal device reports the alert message to the higher layer, where the alert message may be used to instruct the first terminal device to move or move to a location with better signal reception quality.

In some embodiments, after receiving the alert message, the higher layer of the first terminal device may determine subsequent communication behavior of the terminal device based on the alert message, for example, instruct the terminal device to move to a location with better signal reception quality or to ignore the alert message, so that the terminal device continues to communicate with the network device (for example, re-receiving the data channel) at a current location.

The following provides an example of a procedure in which the first terminal device receives the first channel and reports the alert message, by using an example in which the data channel carries a paging message and an example in which the data channel carries a system message.

In a possible implementation, in embodiments of this application, the network device may use a PDCCH used for scheduling a PDSCH that carries a paging message as the first channel, to provide the alert message to the terminal device. In some embodiments, the first channel may be scrambled with a P-RNTI, or in other words, information for the scheduled PDSCH may be carried in DCI scrambled with the P-RNTI. For example, the information of the scheduled PDSCH may be carried in DCI 1_0 with CRC scrambled by the P-RNTI. In some embodiments, after receiving the PDCCH for scheduling the paging message, the terminal device may fail to further receive the PDSCH carrying the paging message, since the terminal device is at a location with poor signal reception quality. In this case, the physical layer of the terminal device may report the alert message to the higher layer to instruct the terminal device to move to a location with better signal reception quality.

In another possible implementation, in embodiments of this application, the network device may use a PDCCH carrying a short message as the first channel, to provide the alert message to the terminal device. In some embodiments, the short message may be used to instruct the terminal device to update a system message. In some embodiments, the first channel may be scrambled with a P-RNTI, or in other words, the short message may be carried in the first channel scrambled with the P-RNTI. For example, the short message may be carried in DCI 1_0 with CRC scrambled by the P-RNTI. In some embodiments, after receiving the PDCCH carrying the short message, the terminal device may fail to further receive a system message since the terminal device is at a location with poor signal reception quality. In this case, the physical layer of the terminal device may report the alert message to the higher layer to instruct the terminal device to move to a location with better signal reception quality.

It may be learned from the formulas for determining the PF and the PO mentioned above that a plurality of terminal devices may monitor a same PO. Therefore, the terminal device can determine whether the terminal device is being paged only when the terminal device receives a PDSCH carrying a paging message. Based on this, if the physical layer of the terminal device reports the alert message to the higher layer whenever it receives a PDCCH for scheduling a paging message but fails to further receive a PDSCH carrying a paging message, false alarms occur with a specific probability.

For the foregoing problems, in embodiments of this application, whether the physical layer of the terminal device is required to report alert information to the higher layer may be indicated by first information, thereby reducing a probability of false alarms. The following describes the first information in detail.

A manner for indicating the first information is not limited in embodiments of this application. Several possible implementations are exemplarily provided below.

In a possible implementation, the first information may be carried in one bit to instruct the physical layer of the terminal device whether to report the alert message to the higher layer. For example, when a value of the first information is "1", it may instruct the physical layer of the terminal device to report the alert message to the higher layer; and when the value of the first information is "0," it may instruct the physical layer of the terminal device not to report the alert message to the higher layer. Alternatively, when a value of the first information is "0," it may instruct the physical layer of the terminal device to report the alert message to the higher layer; and when the value of the first information is "1," it may instruct the physical layer of the terminal device not to report the alert message to the higher layer.

In another possible implementation, the first information may be carried in a plurality of bits to instruct the physical layer of the terminal device whether to report the alert message to the higher layer. In some embodiments, the plurality of bits may be used to indicate an index of a terminal device group. For example, when the value of the first information is an index of a terminal device group, it may instruct a physical layer of a terminal device in the terminal device group to report the alert message to a higher layer of the terminal device, but a physical layer of a terminal device in another terminal device group may not report the alert message to a higher layer of the terminal device. Alternatively, when a value of the first information is an index of a terminal device group, it may instruct a physical layer of a terminal device in the terminal device group not to report the alert message to a higher layer of the terminal device, but a physical layer of a terminal device in another terminal device group may report the alert message to a higher layer of the terminal device.

In still another possible implementation, the first information may be carried in a plurality of bits to instruct the physical layer of the terminal device whether to report the alert message to the higher layer. In some embodiments, the plurality of bits may be used to indicate whether the terminal device or the terminal device group is required to report the alert message. For example, when the value of the first information is "Yes", "Report", or other related information, it may instruct the physical layer of the terminal device to report the alert message to the higher layer. Alternatively, when the value of the first information is "No", "Do not report", or other related information, it may instruct the physical layer of the terminal device not to report the alert message to the higher layer.

In some embodiments, the first channel (for example, the PDCCH for scheduling the data channel) may include a first information field. The first information field may be used to indicate the first information. In other words, in embodiments of this application, the first information may be indicated to the terminal device by using the first information field, to reduce a probability of false alarms transmitted between different terminal devices within a same PO.

In embodiments of this application, the first information field included in the first channel is not limited, and may be any information field in the first channel. For example, the first information field may be a reserved bit field in the first channel, and the reserved bit field may be used to provide the first information to the terminal device. In some embodiments, the reserved bit field may be a scrambled bit field. For example, the reserved bit field may be a reserved bit field in DCI scrambled with a P-RNTI. In a specific example, the reserved bit field may be a reserved bit field in DCI 1_0 with CRC scrambled by a P-RNTI.

For example, the first channel is a PDCCH for scheduling a paging message. When the first channel (that is, DCI 1_0 with the CRC scrambled by the P-RNTI) is only used to schedule a PDSCH carrying the paging message, an 8-bit short message field in DCI 1_0 is the reserved bit field, which may be used to indicate the first information to the terminal device, thereby reducing a probability of false alarms.

In some embodiments, the first information field may include one or more bits, and the one or more bits may be used to indicate first information corresponding to one or more terminal devices.

In some embodiments, one or more bits included in the first information field may be used to indicate first information corresponding to one or more terminal device groups (or referred to as terminal subgroups), or in other words, the one or more bits included in the first information field may be used to indicate first information corresponding to terminal devices in the one or more terminal device groups. In this case, it may be considered that a granularity of indication of the first information is per terminal device group. In other words, the first information indicates, at a granularity of terminal device groups, whether to an alert message.

In some embodiments, each of the one or more terminal device groups may include one or more terminal devices.

In some implementations, a quantity of terminal devices within each PO may first be determined based on a quantity of PFs in a DRX cycle and a quantity of POs in each PF. For example, a quantity of terminal devices within each PO may be determined according to the following formula: $N_{UE}^{PO} = 1024/(N * Ns)$, where $N_{UE}^{PO}$ denotes a quantity of terminal devices within one PO, N denotes a quantity of PFs in a DRX cycle, and *Ns* denotes a quantity of POs in one PF. In some embodiments, after a quantity of terminal devices within each PO is determined, the terminal devices within each PO may be classified into one or more terminal device groups, and each of the one or more terminal device groups may include one or more terminal devices. For example, $N_{UE}^{PO}$ terminal devices within each PO may be classified into $N_{SG}^{PO}$ terminal device groups. In this way, whether to report the alert message may be indicated at a granularity of terminal device groups. For example, which bits (for example, X bits) in the first information field can be used to instruct a terminal device whether to or report the alert message to a higher layer may be determined based on a quantity $N_{SG}^{PO}$ of terminal device groups.

Several implementations of how to indicate, at a granularity of terminal device groups, whether to report an alert message are provided below.

Implementation 1:

Each of the one or more bits described above may correspond to one terminal device group, and may be used to instruct a physical layer of each terminal device in the corresponding one terminal device group whether to or report the alert message to a higher layer of the terminal device.

For example, the first information field includes X (X is a positive integer greater than or equal to 1) bits. Each of the X bits in the first information field may indicate one terminal device group. In this case, X may be equal to $N_{SG}^{PO}$, where $N_{SG}^{PO}$ denotes a quantity of terminal device groups within one PO. For a terminal device group whose index is $i_{SG}$ ($0 \le i_{SG}$ <X), a terminal device in the terminal device group may determine, based on a value of an $i_{SG}{}^{th}$ bit in the X bits, whether to report the alert message to a higher layer of the terminal device.

In an example, if the value of the $i_{SG}{}^{th}$ bit in the X bits is "1," a physical layer of each terminal device in the terminal device group whose index is $i_{SG}$ may report the alert message to a higher layer of the terminal device to instruct the terminal device to move to a location with better signal reception quality. If the value of the $i_{SG}{}^{th}$ bit in the X bits is "0", a physical layer of each terminal device in the terminal device group whose index is $i_{SG}$ may not report the alert message to a higher layer of the terminal device.

In another example, if the value of the $i_{SG}{}^{th}$ bit in the X bits is "0," a physical layer of each terminal device in the terminal device group whose index is $i_{SG}$ may report the alert message to a higher layer of the terminal device to instruct the terminal device to move to a location with better signal reception quality. If the value of the $i_{SG}{}^{th}$ bit in the X bits is "1", a physical layer of each terminal device in the terminal device group whose index is $i_{SG}$ may not report the alert message to a higher layer of the terminal device.

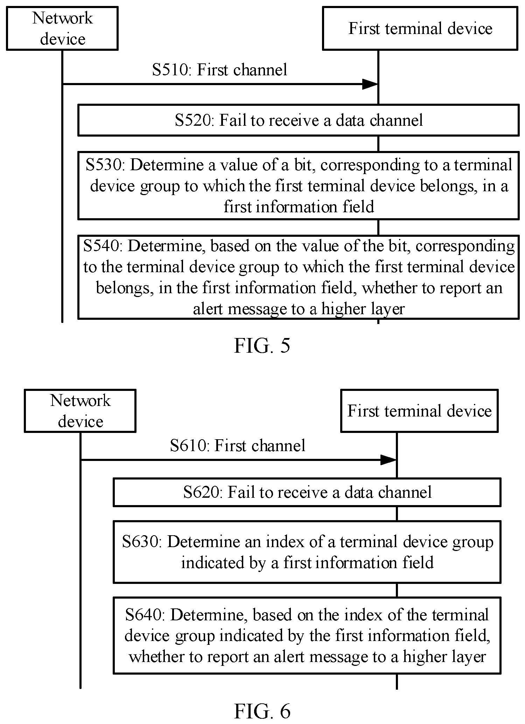

With reference to FIG. 5, the following provides an example of a possible procedure of Implementation 1. The procedure shown in FIG. 5 may include step S510 to step S540.

In step S510, the first terminal device receives the first channel. The first channel may be used to provide the alert message.

For related descriptions of step S510, reference may be made to the descriptions of step S410. For brevity, details are not described herein again.

In step S520, the first terminal device fails to receive the data channel.

For related descriptions of step S520, reference may be made to the descriptions of step S420. For brevity, details are not described herein again.

In step S530, the first terminal device determines a value of a bit, corresponding to a terminal device group to which the first terminal device belongs, in the first information field.

For example, the terminal device group to which the first terminal device belongs is a first terminal device group. The first terminal device may determine a value of a bit, corresponding to the first terminal device group, in the first information field, to determine whether to report the alert message to a higher layer of the first terminal device. In an example, assuming that an index of the first terminal device group is $i_{first}$, $i_{first}{}^{th}$ bit in the first information field, to determine whether to report the alert message to the higher layer.

In step S540, the first terminal device determines, based on a value of a bit, corresponding to a terminal device group to which the first terminal device belongs, whether to report the alert message to a higher layer of the first terminal device.

For example, the terminal device group to which the first terminal device belongs is a first terminal device group. If a value of a bit corresponding to the first terminal device group instructs each terminal device in the first terminal device group to report the alert message to a higher layer of the terminal device, a physical layer of the first terminal device determines to report the alert message to the higher layer. If the value of the bit corresponding to the first terminal device group instructs each terminal device in the first terminal device group not to report the alert message to a higher layer of the terminal device, the physical layer of the first terminal device determines not to report the alert message to the higher layer.

It should be noted that the first terminal device group mentioned in embodiments of this application may be any one of the one or more terminal device groups, and the first terminal device may be any one of terminal devices in the first terminal device group. The same applies to the first terminal device group and the first terminal device mentioned hereinafter. For brevity, details are not repeated below.

Implementation 2:

The one or more bits described above correspond to one terminal device group, and the one or more bits are used to instruct a physical layer of each terminal device in the corresponding one terminal device group whether to report the alert message to a higher layer of the terminal device.

For example, the first information field includes X (X is a positive integer greater than or equal to 1) bits. The X bits may indicate one terminal device group. In an implementation, the X bits may indicate an index of one terminal device group. In a case in which the X bits indicate an index of one terminal device group, X may be equal to $\left\lceil \log_2(N_{SG}^{PO}) \right\rceil$, where $\lceil * \rceil$ indicates a ceiling operation. For the terminal device group indicated by the X bits, each terminal device in the terminal device group may report the alert message to a higher layer of the terminal device, or may not report the alert message to a higher layer of the terminal device.

In an example, when it is predefined, pre-configured, or configured by a network that the terminal device group indicated by the X bits reports the alert message to a higher layer of the terminal device group, each terminal device in the terminal device group indicated by the X bits may report the alert message to a higher layer of the terminal device, while a terminal device in another terminal device group may not report the alert message to a higher layer of the terminal device.

In another example, when it is predefined, pre-configured, or configured by a network that the terminal device group indicated by the X bits does not report the alert message to a higher layer of the terminal device group, each terminal device in the terminal device group indicated by the X bits may not report the alert message to a higher layer of the terminal device, while a terminal device in another terminal device group may report the alert message to a higher layer of the terminal device.

It should be noted that a quantity of bits included in the one or more bits described above may be greater than or equal to X bits. For example, the quantity of bits included in the one or more bits described above may be equal to X bits, and the X bits indicate one terminal device group. Alternatively, the quantity of bits included in the one or more bits described above may be equal to 2*X bits, 3*X bits, or the like, where each set of X bits may indicate one terminal device group. For example, the quantity of bits included in the one or more bits described above is equal to 2*X bits. The 2*X bits may indicate two terminal device groups.

With reference to FIG. 6, the following provides an example of a possible procedure of Implementation 2. The procedure shown in FIG. 6 may include step S610 to step S640.

In step S610, the first terminal device receives the first channel. The first channel may be used to provide the alert message.

For related descriptions of step S610, reference may be made to the descriptions of step S410. For brevity, details are not described herein again.

In step S620, the first terminal device fails to receive the data channel.

For related descriptions of step S620, reference may be made to the descriptions of step S420. For brevity, details are not described herein again.

In step S630, the first terminal device determines an index of a terminal device group indicated by the first information field.

For example, the terminal device group to which the first terminal device belongs is a first terminal device group. The first terminal device may determine whether the index of the terminal device group indicated by the first information field includes an index of the first terminal device group, to determine whether to report the alert message to the higher layer of the first terminal device.

In step S640, the first terminal device determines, based on the index of the terminal device group indicated by the first information field, whether to report the alert message to a higher layer of the first terminal device.

For example, the terminal device group to which the first terminal device belongs is the first terminal device group. In a possible implementation, if the index of the terminal device group indicated by the first information field includes the index of the first terminal device group, the physical layer of the first terminal device determines to report the alert message to the higher layer. If the index of the terminal device group indicated by the first information field does not include the index of the first terminal device group, the physical layer of the first terminal device determines not to report the alert message to the higher layer. In another possible implementation, if the index of the terminal device group indicated by the first information field includes the index of the first terminal device group, the physical layer of the first terminal device determines not to report the alert message to the higher layer. If the index of the terminal device group indicated by the first information field does not include the index of the first terminal device group, the physical layer of the first terminal device determines to report the alert message to the higher layer.

In some embodiments, if the first terminal device belongs to the first terminal device group, and the first information instructs a physical layer of each terminal device in the first terminal device group to report the alert message to a higher layer of the terminal device, the physical layer of the first terminal device may report the alert message to the higher layer of the first terminal device.

In some embodiments, if the first terminal device belongs to the first terminal device group, and the first information instructs a physical layer of each terminal device in the first terminal device group not to report the alert message to a higher layer of the terminal device, the physical layer of the first terminal device may not report the alert message to the higher layer of the first terminal device.

**Embodiment 2: The first channel is a dedicated channel for carrying an alert** message

In Embodiment 2, the first channel is a dedicated channel for carrying an alert message. For example, the first channel is a PDCCH dedicated for carrying an alert message. In other words, in embodiments of this application, the dedicated channel carrying the alert message (for example, a dedicated PDCCH) may be used as the first channel (that is, an alert channel). In this case, in embodiments of this application, signalling overheads may be reduced while ensuring that the first channel has better coverage performance. This is because the dedicated channel carrying the alert message may carry the alert message by using a relatively small quantity of DCI bits, thereby reducing signalling overheads. In addition, in embodiments of this application, when the dedicated channel carrying the alert message is used as the first channel, a transmission location of the first channel may be flexibly configured.

In some embodiments, the first channel may be a PDCCH including a first DCI format. The first DCI format is used to provide the alert message. In other words, in some embodiments, the PDCCH including the first DCI format may be a dedicated channel carrying the alert message.

In some embodiments, the first channel may be scrambled with a first RNTI, or in other words, the first DCI format may be scrambled with the first RNTI. For example, the first channel or the CRC of the first DCI format may be scrambled with the first RNTI.

The first RNTI is not specifically limited in embodiments of this application. In some embodiments, the first RNTI may be an existing RNTI. For example, the first RNTI may be a PEI-RNTI. In some embodiments, the first RNTI may be a newly added RNTI. For example, the first RNTI may be an RNTI dedicated to the alert message.

In some embodiments, the first DCI format may be associated with one or more POs. In this way, the first DCI format may be used for providing the alert message to one or more terminal devices corresponding to the associated one or more POs. For example, in embodiments of this application, the first DCI format may be associated with $N_{PO}^{ALT}$ ($N_{PO}^{ALT}$ is a positive integer greater than or equal to 1) POs, so as to provide the alert message to a terminal device within the $N_{PO}^{ALT}$ POs by using the first DCI format.

In some embodiments, after receiving the first channel or the alert message transmitted by the network device, a physical layer of the terminal device may report the alert message to a higher layer of the terminal device. In this way, the higher layer of the terminal device may determine subsequent behavior of the terminal device based on the alert message. For example, the alert message is used to instruct the terminal device to move or move to a location with better signal reception quality. In this case, the higher layer of the terminal device may instruct, based on indication of the alert message, the terminal device to move to a location with better signal reception quality, so as to achieve better communication with the network device subsequently.

For example, if the terminal device fails to receive a paging message or a system message, the terminal device may determine, based on the received PDCCH including the first DCI format, whether to report the alert message to the higher layer, so as to instruct the terminal device to move to a location with better signal reception quality, thereby increasing a success rate of the terminal device in further receiving or transmitting a data channel.

In some embodiments, after receiving the alert message, the higher layer of the first terminal device may determine subsequent communication behavior of the terminal device based on the alert message, for example, instruct the terminal device to move to a location with better signal reception quality or to ignore the alert message, so that the terminal device continues to communicate with the network device (for example, re-receiving the data channel) at a current location.

Considering that a plurality of terminal devices may monitor a same PO, to reduce a probability of false alarms transmitted between different terminal devices within a same PO, in a feasible solution in embodiments of this application, whether a physical layer of a terminal device is required to report the alert information to a higher layer of the terminal device may be indicated by the first information, thereby reducing a probability of false alarms.

For a manner of indicating the first information, reference may be made to the foregoing description. For brevity, details are not described herein again.

In some embodiments, the first channel (for example, a dedicated channel carrying an alert message) may include a second information field. The second information field may be used to indicate the first information. In other words, in embodiments of this application, the first information may be indicated to the terminal device by using the second information field, to reduce a probability of false alarms transmitted between different terminal devices within a same PO.

In other words, in some embodiments, the first DCI format may include the second information field, and the second information field may be used to indicate the first information. In other words, in embodiments of this application, the first information may be indicated to the terminal device by using the second information field, to reduce a probability of false alarms transmitted between different terminal devices within a same PO.

In embodiments of this application, the second information field is not specifically limited, and may be any information field in the first channel or the first DCI format. For example, the second information field may be a dedicated information field (or referred to as an alert information field) in the first channel or the first DCI format, and the dedicated information field is used to provide the first information to the terminal device.

In some embodiments, the second information field may include one or more bits, and the one or more bits may be used to indicate first information corresponding to one or more terminal devices.

In some embodiments, one or more bits included in the second information field may be used to indicate first information corresponding to one or more terminal device groups (or referred to as terminal subgroups), or in other words, the one or more bits included in the second information field may be used to indicate first information corresponding to terminal devices in the one or more terminal device groups. In this case, it may be considered that a granularity of indication of the first information is per terminal device group. In other words, the first information indicates, at a granularity of terminal device groups, whether to report an alert message.

In some implementations, first, the first DCI format may be associated with $N_{PO}^{ALT}$ POs, so that the alert message may be provided to terminal devices within the $N_{PO}^{ALT}$ POs by using the first DCI format. Then, terminal devices within each PO may be be classified into one or more terminal device groups, and each of the one or more terminal device groups may include one or more terminal devices. For example, $N_{UE}^{PO}$ terminal devices within each PO may be classified into $N_{SG}^{PO}$ terminal device groups. For related descriptions of how to determine a quantity of terminal devices within each PO, reference may be made to the foregoing description, and details are not described herein again. In this way, whether an alert message is required to be reported may be indicated at a granularity of terminal device groups. For example, which bits (for example, Y bits) in the second information field can be used to instruct a terminal device whether to report the alert message to a higher layer may be determined based on a quantity $N_{PO}^{ALT}$ of POs and a quantity $N_{SG}^{PO}$ of terminal device groups.

Several implementations of how to indicate, at a granularity of terminal device groups, whether to report an alert message are provided below.

Implementation 1:

Each of the one or more bits described above may correspond to one terminal device group, and may be used to instruct a physical layer of each terminal device in the corresponding one terminal device group whether to report the alert message to a higher layer of the terminal device.

For example, the second information field includes Y (Y is a positive integer greater than or equal to 1) bits. Each of the Y bits in the second information field may indicate one terminal device group.

In some embodiments, a value of Y may be determined based on $N_{PO}^{ALT}$ and $N_{SG}^{PO}$. In other words, the quantity Y of bits included in the second information field in the first channel or the first DCI format may be determined based on $N_{PO}^{ALT}$ and $N_{SG}^{PO}$. Implementation 1 is used as an example, in which Y may be equal to $N_{PO}^{ALT} * N_{SG}^{PO}$. For a terminal device group whose index is $i_{SG}$ ($0 \leq i_{SG} < N_{SG}^{PO}$), a terminal device in the terminal device group may determine, based on a value of an $(i_{PO} * N_{SG}^{PO} + i_{SG})^{\text{th}}$ bit in the second information field, whether to report the alert message to a higher layer of the terminal device. In some embodiments, $i_{PO}$ denotes an index of a PO, where

$$i_{PO} = \left( (UE\_ID \bmod N) * N_s + i\_s \right) \bmod N_{PO}^{ALT}.$$

In an example, if a value of an $(i_{PO} * N_{SG}^{PO} + i_{SG})^{\text{th}}$ bit in the Y bits is "1," a physical layer of each terminal device in the terminal device group whose index is $i_{SG}$ may report the alert message to a higher layer of the terminal device to instruct the terminal device to move to a location with better signal reception quality. If the value of the $(i_{PO} * N_{SG}^{PO} + i_{SG})^{\text{th}}$ bit in the Y bits is "0", a physical layer of each terminal device in the terminal device group whose index is $i_{SG}$ may not report the alert message to a higher layer of the terminal device.

In another example, if the value of the $(i_{PO} * N_{SG}^{PO} + i_{SG})^{\text{th}}$ bit in the Y bits is "0," a physical layer of each terminal device in the terminal device group whose index is $i_{SG}$ may report the alert message to a higher layer of the terminal device to instruct the terminal device to move to a location with better signal reception quality. If the value of the $(i_{PO} * N_{SG}^{PO} + i_{SG})^{\text{th}}$ bit in the Y bits is "1", a physical layer of each terminal device in the terminal device group whose index is $i_{SG}$ may not report the alert message to a higher layer of the terminal device.

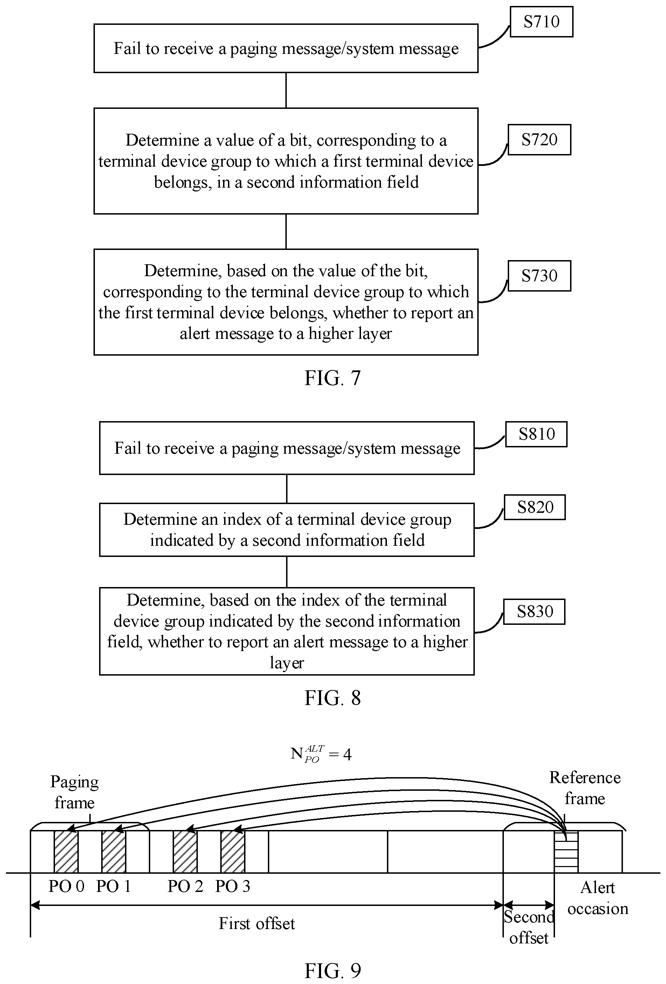

With reference to FIG. 7, the following provides an example of a possible procedure of Implementation 1. The procedure shown in FIG. 7 may include step S710 to step S730.

In step S710, the first terminal device fails to receive a paging message/system message.

In step S720, the first terminal device determines a value of a bit, corresponding to a terminal device group to which the first terminal device belongs, in the second information field.

For example, the terminal device group to which the first terminal device belongs is a first terminal device group. The first terminal device may determine a value of a bit, corresponding to the first terminal device group, in the second information field, to determine whether to report the alert message to a higher layer of the first terminal device. In an example, assuming that an index of the first terminal device group is $i_{first}$, of an $(i_{PO} * N_{SG}^{PO} + i_{first})^{\text{th}}$ bit in the second information field, to determine whether to report the alert message to the higher layer.

In step S730, the first terminal device determines, based on a value of a bit, corresponding to a terminal device group to which the first terminal device belongs, whether to report the alert message to a higher layer of the first terminal device.

For example, the terminal device group to which the first terminal device belongs is a first terminal device group. If a value of a bit corresponding to the first terminal device group instructs each terminal device in the first terminal device group to report the alert message to a higher layer of the terminal device, a physical layer of the first terminal device determines to report the alert message to the higher layer. If the value of the bit corresponding to the first terminal device group instructs each terminal device in the first terminal device group not to report the alert message to a higher layer of the terminal device, the physical layer of the first terminal device determines not to report the alert message to the higher layer.

Implementation 2:

The one or more bits described above correspond to one terminal device group, and the one or more bits are used to instruct a physical layer of each terminal device in the corresponding one terminal device group whether to or report the alert message to a higher layer of the terminal device.

For example, the second information field includes Y (Y is a positive integer greater than or equal to 1) bits. The Y bits may indicate one terminal device group. In an implementation, the Y bits may indicate an index of one terminal device group. In a case in which the Y bits indicate an index of one terminal device group, Y may be equal to $\left\lceil \log_2(N_{PO}^{ALT} * N_{SG}^{PO}) \right\rceil$, where $\lceil * \rceil$ indicates a ceiling operation. For the terminal device group indicated by the Y bits, each terminal device in the terminal device group may report the alert message to a higher layer of the terminal device, or may not report the alert message to a higher layer of the terminal device.

In some embodiments, to distinguish terminal device groups within different POs, an index of the terminal device group may be determined based on $i_{PO}$ and $i_{SG}$. terminal device may determine that an index of a terminal device group to which the terminal device belongs is $i_{PO} * N_{SG}^{PO} + i_{SG}$. For a definition of each parameter, reference may be made to the foregoing description. Details are not repeated herein.

In an example, when it is predefined, pre-configured, or configured by a network that the terminal device group indicated by the Y bits reports the alert message to a higher layer of the terminal device group, each terminal device in the terminal device group indicated by the Y bits may report the alert message to a higher layer of the terminal device, while a terminal device in another terminal device group may not report the alert message to a higher layer of the terminal device.

In another example, when it is predefined, pre-configured, or configured by a network that the terminal device group indicated by the Y bits does not report the alert message to a higher layer of the terminal device group, each terminal device in the terminal device group indicated by the Y bits may not report the alert message to a higher layer of the terminal device, while a terminal device in another terminal device group may report the alert message to a higher layer of the terminal device.

It should be noted that a quantity of bits included in the one or more bits described above may be greater than or equal to Y bits. For example, the quantity of bits included in the one or more bits described above may be equal to Y bits, and the Y bits indicate one terminal device group. Alternatively, the quantity of bits included in the one or more bits described above may be equal to 2*Y bits, 3*Y bits, or the like, where each set of Y bits may indicate one terminal device group. For example, the quantity of bits included in the one or more bits described above is equal to 2*Y bits. The 2*Y bits may indicate two terminal device groups.

With reference to FIG. 8, the following provides an example of a possible procedure of Implementation 2. The procedure shown in FIG. 8 may include step S810 to step S830.

In step S810, the first terminal device fails to receive a paging message/system message.

In step S820, the first terminal device determines an index of a terminal device group indicated by the second information field.

For example, the terminal device group to which the first terminal device belongs is a first terminal device group. The first terminal device may determine whether the index of the terminal device group indicated by the second information field includes an index of the first terminal device group, to determine whether to report the alert message to the higher layer of the first terminal device.

In step S830, the first terminal device determines, based on the index of the terminal device group indicated by the second information field, whether to report the alert message to a higher layer of the first terminal device.

For example, the terminal device group to which the first terminal device belongs is the first terminal device group. In a possible implementation, if the index of the terminal device group indicated by the second information field includes the index of the first terminal device group, the physical layer of the first terminal device determines to report the alert message to the higher layer. If the index of the terminal device group indicated by the second information field does not include the index of the first terminal device group, the physical layer of the first terminal device determines not to report the alert message to the higher layer. In another possible implementation, if the index of the terminal device group indicated by the second information field includes the index of the first terminal device group, the physical layer of the first terminal device determines not to report the alert message to the higher layer. If the index of the terminal device group indicated by the second information field does not include the index of the first terminal device group, the physical layer of the first terminal device determines to report the alert message to the higher layer.

In some embodiments, if the first terminal device belongs to the first terminal device group, and the first information instructs a physical layer of each terminal device in the first terminal device group to report the alert message to a higher layer of the terminal device, the physical layer of the first terminal device may report the alert message to the higher layer of the first terminal device.

In some embodiments, if the first terminal device belongs to the first terminal device group, and the first information instructs a physical layer of each terminal device in the first terminal device group not to report the alert message to a higher layer of the terminal device, the physical layer of the first terminal device may not report the alert message to the higher layer of the first terminal device.

In some embodiments, a terminal device (for example, the first terminal device) may monitor the first channel to acquire the alert message and/or the first information. For example, the terminal device may monitor the first channel in a first occasion (or referred to as an alert occasion). The following describes the first occasion.

In some embodiments, the first occasion may include a set of PDCCH monitoring occasions, or in other words, the first occasion may include a plurality of PDCCH monitoring occasions.

In some embodiments, the first occasion may include S*M consecutive PDCCH monitoring occasions, where S denotes a quantity of SSBs actually transmitted, and M denotes a quantity of PDCCH monitoring occasions corresponding to each SSB.

In some embodiments, an $(m*S+K)^{th}$ PDCCH monitoring occasion used for carrying the alert message in the first occasion corresponds to a $K^{th}$ SSB transmitted, where m = 0, 1,... , M-1; and K = 1, 2,... , S.

In some embodiments, PDCCH monitoring occasions used for carrying the alert message may be sequentially numbered starting from the first PDCCH monitoring occasion used for carrying the alert message in the first occasion, for example, may be sequentially numbered from zero starting from the first PDCCH monitoring occasion used for carrying the alert message in the first occasion.

In some embodiments, if the terminal device detects the alert message in the first occasion, the terminal device may not monitor a subsequent monitoring occasion associated with the first occasion.

In some embodiments, one DRX cycle of the terminal device may include one or more first occasions. For example, one DRX cycle of the terminal device may include one first occasion. In this case, the terminal device may monitor one first occasion in each DRX cycle. Alternatively, one DRX cycle of the terminal device may include a plurality of first occasions. For example, the network may additionally configure periodicity of the first occasion such that one DRX cycle may include a plurality of first occasions. In this case, the terminal device may monitor one or more first occasions in each DRX cycle.

In some embodiments, the terminal device monitoring the first channel in the first occasion may be understood as the terminal device monitoring the first channel on a set of PDCCH monitoring occasions included in the first occasion. For example, the terminal device may monitor a PDCCH carrying the first DCI format on a set of PDCCH monitoring occasions included in the first occasion.

In embodiments of this application, a manner of determining a time domain location of the first occasion is not specifically limited. For example, the time domain location of the first occasion may be determined based on one or more of the following: a time domain location in which one PO among one or more POs associated with the first occasion is located; a first offset; or a second offset. The first offset may be a frame-level offset, and the second offset may be a symbol-level offset.

In some embodiments, the time domain location in which one PO among one or more POs associated with the first occasion is located may be understood as a reference point for determining the time domain location of the first occasion. In other words, in embodiments of this application, the time domain location of the first occasion may be determined based on the reference point and an offset. For example, in embodiments of this application, one PO among the one or more POs associated with the first occasion may be used as a target PO, and the reference point may be determined based on the target PO. Then, the time domain location of the first occasion may be determined (for example, the first PDCCH monitoring occasion within the first occasion may be determined) based on the reference point and an offset. It should be noted that any PO among the one or more POs associated with the first occasion may be used as the target PO, which is not limited in embodiments of this application. For example, the first PO among the one or more POs associated with the first occasion may be used as the target PO. Alternatively, the last PO among the one or more POs associated with the first occasion may be used as the target PO, and so on.

In embodiments of this application, a manner of determining the reference point for the time domain location of the first occasion is not limited, and the reference point may be determined based on a time domain location in which any PO among the one or more POs associated with the first occasion is located. For example, the reference point may be a starting point of a frame in which the first PO among the one or more POs associated with the first occasion is located, or a starting point of a frame obtained by shifting, by a first offset, from the starting point of the frame in which the first PO is located. Alternatively, the reference point may be an end point of a frame in which the first PO among the one or more POs associated with the first occasion is located, or an end point of a frame obtained by shifting, by the first offset, from the end point of the frame in which the first PO is located. Alternatively, the reference point may be a starting point of a frame in which the last PO among the one or more POs associated with the first occasion is located, or a starting point of a frame obtained by shifting, by the first offset, from the starting point of the frame in which the last PO is located, or the like.

A possible implementation of determining the time domain location of the first occasion is provided below with reference to FIG. 9. As shown in FIG. 9, first, a first shift may be performed on a starting point of a PF in which the first PO among the one or more POs associated with the first occasion (four POs are associated with the first occasion in the example shown in FIG. 9) is located, where an offset of the first shift is the first offset (that is, a frame-level offset), a PF obtained by the shift is used as a reference frame, and a starting point of the reference frame is used as the reference point. Then, the time domain location of the first occasion may be determined based on the reference point and the second offset (that is, a symbol-level offset).

In some embodiments, by configuring different first offsets and/or second offsets, the first occasion may be located before the POs associated with the first occasion, after the POs associated with the first occasion, or in a same time domain location as the POs associated with the first occasion, thereby flexibly configuring the transmission location of the first channel.

## Embodiment 3: Provide an alert message by using a first signal

In Embodiment 3, in embodiments of this application, the alert message may be carried in a first signal (for example, a reference signal). In this case, the first signal may also be referred to as or understood as an alert signal. In embodiments of this application, when the alert message is carried by using the first signal, the terminal device receives the first signal without presynchronization with the network device, which is conducive to reducing reception complexity. In addition, in embodiments of this application, when the alert message is carried by using the first signal, a transmission location of the first signal may be flexibly configured.

In some embodiments, the first signal may include a first sequence. In some embodiments, the first sequence included in the first signal may be used to provide the alert message.

In some embodiments, the first sequence included in the first signal may be used to instruct the physical layer of the terminal device whether to report the alert message to the higher layer.

In some embodiments, the first sequence may be associated with one or more POs. In this way, the first sequence may be used to provide the alert message to one or more terminal devices corresponding to the associated one or more POs. For example, in embodiments of this application, the first sequence may be associated with $N_{PO}^{ALT}$ ( $N_{PO}^{ALT}$ is a positive integer greater than or equal to 1) POs, so as to provide the alert message to terminal devices within the $N_{PO}^{ALT}$ POs by using the first sequence.

In some embodiments, after receiving the first signal or the alert message transmitted by the network device, the physical layer of the terminal device may report the alert message to the higher layer of the terminal device. In this way, the higher layer of the terminal device may determine subsequent behavior of the terminal device based on the alert message. For example, the alert message is used to instruct the terminal device to move or move to a location with better signal reception quality. In this case, the higher layer of the terminal device may instruct, based on indication of the alert message, the terminal device to move to a location with better signal reception quality, so as to achieve better communication with the network device subsequently.

For example, if the terminal device fails to receive a paging message or a system message, the terminal device may determine, based on the received first sequence, whether to report the alert message to the higher layer, so as to instruct the terminal device to move to a location with better signal reception quality, thereby increasing a success rate of the terminal device in further receiving or transmitting a data channel.

In some embodiments, after receiving the alert message, the higher layer of the first terminal device may determine subsequent communication behavior of the terminal device based on the alert message, for example, instruct the terminal device to move to a location with better signal reception quality or to ignore the alert message, so that the terminal device continues to communicate with the network device (for example, re-receiving the data channel) at a current location.

Considering that a plurality of terminal devices may monitor a same PO, to reduce a probability of false alarms transmitted between different terminal devices within a same PO, in a feasible solution in embodiments of this application, whether the physical layer of the terminal device is required to report the alert information to the higher layer of the terminal device may be indicated by the first sequence, thereby reducing a probability of false alarms.

In an implementation, the first sequence may indicate a plurality of terminal device groups, to instruct each terminal device in the plurality of terminal device groups whether to report indication information for the alert message to a higher layer of the terminal device. For example, the first sequence may instruct terminal devices in each terminal device group within the one or more POs associated with the first sequence whether to report the alert message to respective higher layers of the terminal devices.

In another implementation, the first sequence may indicate one terminal device group, to instruct each terminal device in the terminal device group whether to report the alert message to a higher layer of the terminal device.

In some embodiments, the first sequence may include one or more values, and each of the one or more values may correspond to a plurality of terminal device groups. In some embodiments, each of the one or more values may be used to instruct a physical layer of each terminal device in the plurality of terminal device groups whether to report the alert message to a higher layer of the terminal device.

In some embodiments, the first sequence may include one or more values, and each of the one or more values may correspond to one terminal device group. In some embodiments, each of the one or more values may be used to instruct a physical layer of each terminal device in the terminal device group whether to report the alert message to a higher layer of the terminal device.

In some implementations, first, the first sequence may be associated with $N_{PO}^{ALT}$ POs, so that the alert message is provided to terminal devices within the $N_{PO}^{ALT}$ POs by using the first sequence. Then, terminal devices within each PO may be be classified into one or more terminal device groups, and each of the one or more terminal device groups may include one or more terminal devices. For example, $N_{UE}^{PO}$ terminal devices within each PO may be classified into $N_{SG}^{PO}$ terminal device groups. For related descriptions of how to determine a quantity of terminal devices within each PO, reference may be made to the foregoing description, and details are not described herein again. In this way, whether an alert message is required to be reported may be indicated at a granularity of terminal device groups. For example, a quantity Z of first sequences may be determined based on a quantity $N_{PO}^{ALT}$ of POs and a quantity $N_{SG}^{PO}$ of terminal device groups.

Several implementations of how to indicate, by using the first sequence, whether to report an alert message are provided below.

Implementation 1:

Each of the one or more values described above corresponds to a plurality of terminal device groups, and is used to instruct a physical layer of each terminal device in the corresponding plurality of terminal device groups whether to report the alert message to a higher layer of the terminal device.

For example, different first sequences may carry alert messages (or indication information for instructing whether to report the alert message to a higher layer, hereinafter referred to as first indication information) for $N_{PO}^{ALT} * N_{SG}^{PO}$ terminal device groups. In this case, the quantity Z of first sequences may be equal to $2^{N_{PO}^{ALT} * N_{SG}^{PO}}$. In other words, $Z = 2^{N_{PO}^{ALT} * N_{SG}^{PO}}$ first sequences are required to carry all possible alert messages (or the first indication information) corresponding to $N_{PO}^{ALT} * N_{SG}^{PO}$ terminal device groups.

In an example, the first sequence is required to carry first indication information for two terminal device groups (a terminal device group A and a terminal device group B), and the first indication information for each terminal device group includes two possible cases: reporting the alert message to a higher layer and not reporting the alert message to a higher layer. In this case, the quantity of first sequences required satisfies $Z = 2^2 = 4$. In other words, in this case, four first sequences are required to indicate all possible first indication information corresponding to two terminal device groups. The four first sequences are respectively (Terminal device group A: Report; Terminal device group B: Report), (Terminal device group A: Do not report; Terminal device group B: Report), (Terminal device group A: Report; Terminal device group B: Do not report), and (Terminal device group A: Do not report; Terminal device group B: Do not report).

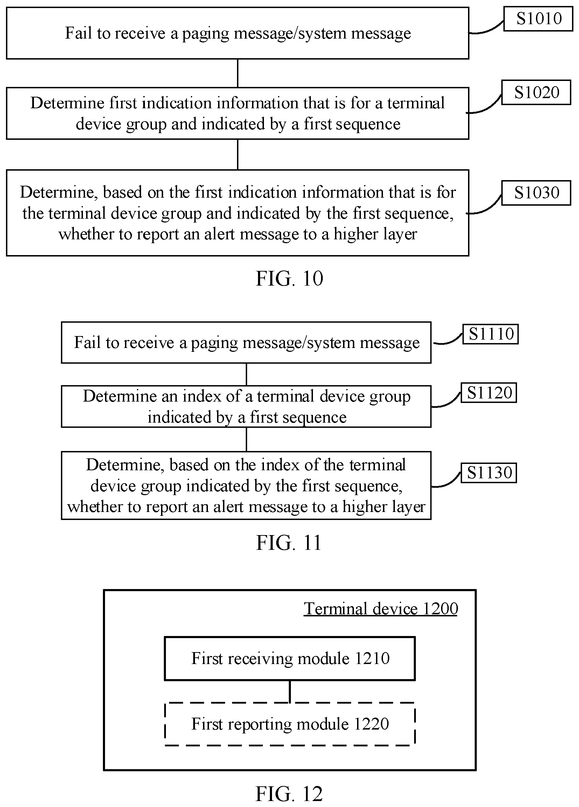

With reference to FIG. 10, the following provides an example of a possible procedure of Implementation 1. The procedure shown in FIG. 10 may include step S1010 to step S1030.

In step S1010, the first terminal device fails to receive a paging message/system message.

In step S1020, the first terminal device determines first indication information that is for a terminal device group and indicated by the first sequence.

For example, the first terminal device determines, based on the first sequence, first indication information of each of a plurality of terminal devices corresponding to the first sequence. For example, the first terminal device belongs to the terminal device group A. Assuming that the first sequence is (Terminal device group A: Report; Terminal device group B: Report), the first terminal device determines that first indication information corresponding to the terminal device group A is that each terminal device in the terminal device A reports the alert message to a higher layer of the terminal device.

In step S1030, the first terminal device determines, based on the first indication information that is for the terminal device group and indicated by the first sequence, whether to report the alert message to a higher layer of the first terminal device.

For example, the terminal device group to which the first terminal device belongs is a first terminal device group. If the first sequence instructs each terminal device in the first terminal device group to report the alert message to a higher layer of the terminal device, the physical layer of the first terminal device determines to report the alert message to the higher layer. If the first sequence instructs each terminal device in the first terminal device group not to report the alert message to a higher layer of the terminal device, the physical layer of the first terminal device determines not to report the alert message to the higher layer.

Implementation 2:

Each of the one or more values described above corresponds to one terminal device group, and is used to instruct a physical layer of each terminal device in the corresponding one terminal device group whether to report the alert message to a higher layer of the terminal device. For example, one of the one or more values described above may indicate an index of one terminal device group. In this case, the quantity Z of first sequences may be equal to $N_{PO}^{ALT} * N_{SG}^{PO}$. For a terminal group indicated by the first sequence, each terminal device in the terminal device group may report the alert message to a higher layer of the terminal device, or may not report the alert message to a higher layer of the terminal device.

In an example, when it is predefined, pre-configured, or configured by a network that the terminal device group indicated by the first sequence reports the alert message to a higher layer of the terminal device group, each terminal device in the terminal device group indicated by the first sequence may report the alert message to a higher layer of the terminal device, while a terminal device in another terminal device group may not report the alert message to a higher layer of the terminal device.

In another example, when it is predefined, pre-configured, or configured by a network that the terminal device group indicated by the first sequence does not report the alert message to a higher layer of the terminal device group, each terminal device in the terminal device group indicated by the first sequence may not report the alert message to a higher layer of the terminal device, while a terminal device in another terminal device group may report the alert message to a higher layer of the terminal device.

With reference to FIG. 11, the following provides an example of a possible procedure of Implementation 2. The procedure shown in FIG. 11 may include step S1110 to step S1130.

In step S1110, the first terminal device fails to receive a paging message/system message.

In step S1120, the first terminal device determines an index of a terminal device group indicated by the first sequence.

For example, the terminal device group to which the first terminal device belongs is a first terminal device group. The first terminal device may determine whether the index of the terminal device group indicated by the first sequence includes an index of the first terminal device group, to determine whether to report the alert message to the higher layer of the first terminal device.

In step S1130, the first terminal device determines, based on the index of the terminal device group indicated by the first sequence, whether to report the alert message to a higher layer of the first terminal device.

For example, the terminal device group to which the first terminal device belongs is the first terminal device group. In a possible implementation, if the index of the terminal device group indicated by the first sequence includes the index of the first terminal device group, the physical layer of the first terminal device determines to report the alert message to the higher layer. If the index of the terminal device group indicated by the first sequence does not include the index of the first terminal device group, the physical layer of the first terminal device determines not to report the alert message to the higher layer. In another possible implementation, if the index of the terminal device group indicated by the first sequence includes the index of the first terminal device group, the physical layer of the first terminal device determines not to report the alert message to the higher layer. If the index of the terminal device group indicated by the first sequence does not include the index of the first terminal device group, the physical layer of the first terminal device determines to report the alert message to the higher layer.

In some embodiments, if the first terminal device belongs to the first terminal device group, and the first sequence instructs a physical layer of each terminal device in the first terminal device group to report the alert message to a higher layer of the terminal device, the physical layer of the first terminal device may report the alert message to the higher layer of the first terminal device.

In some embodiments, if the first terminal device belongs to the first terminal device group, and the first sequence instructs a physical layer of each terminal device in the first terminal device group not to report the alert message to a higher layer of the terminal device, the physical layer of the first terminal device may not report the alert message to the higher layer of the first terminal device.

In some embodiments, a terminal device (for example, the first terminal device) may detect the first signal to acquire the alert message and/or the first indication information. For example, the terminal device may detect the first signal in a first detection occasion. The following describes the first detection occasion.

In some embodiments, the first detection occasion may include a set of signal detection occasions, or in other words, the first detection occasion may include a plurality of signal detection occasions.

In some embodiments, the first detection occasion may include S*M consecutive signal detection occasions, where S denotes a quantity of SSBs actually transmitted, and M denotes a quantity of signal detection occasions corresponding to each SSB.

In some embodiments, an $(m*S+K)^{th}$ signal detection occasion used for carrying the alert message in the first detection occasion corresponds to a $K^{th}$ SSB transmitted, where m = 0, 1,... , M-1; and K = 1, 2,... , S.

In some embodiments, signal detection occasions used for carrying the alert message may be sequentially numbered starting from the first signal detection occasion used for carrying the alert message in the first detection occasion, for example, may be sequentially numbered from zero starting from the first signal detection occasion used for carrying the alert message in the first detection occasion.

In some embodiments, if the terminal device detects the alert message in the first detection occasion, the terminal device may not detect a subsequent signal detection occasion associated with the first detection occasion.

In some embodiments, one DRX cycle of the terminal device may include one or more first detection occasions. For example, one DRX cycle of the terminal device may include one first detection occasion. In this case, the terminal device may detect one first detection occasion in each DRX cycle. Alternatively, one DRX cycle of the terminal device may include a plurality of first detection occasions. For example, the network may additionally configure periodicity of the first detection occasion such that one DRX cycle may include a plurality of first detection occasions. In this case, the terminal device may detect one or more first detection occasions in each DRX cycle.

In some embodiments, the process of detecting the first signal in the first detection occasion by the terminal device may include that the terminal device detects the first signal on a set of signal detection occasions included in the first detection occasion.

In embodiments of this application, a manner of determining a time domain location of the first detection occasion is not specifically limited. For example, the time domain location of the first detection occasion may be determined based on one or more of the following: a time domain location in which one PO among one or more POs associated with the first sequence is located; a third offset; or a fourth offset. The third offset may be a frame-level offset, and the fourth offset may be a symbol-level offset.

In some embodiments, the time domain location in which one PO among one or more POs associated with the first detection occasion or the first sequence is located may be understood as a reference point for determining the time domain location of the first detection occasion. In other words, in embodiments of this application, the time domain location of the first detection occasion may be determined based on the reference point and an offset. For example, in embodiments of this application, one PO among the one or more POs associated with the first detection occasion or the first sequence may be used as a target PO, and the reference point may be determined based on the target PO. Then, the time domain location of the first detection occasion may be determined (for example, the first signal detection occasion within the first detection occasion may be determined) based on the reference point and an offset. It should be noted that any PO among the one or more POs associated with the first detection occasion or the first sequence may be used as the target PO, which is not limited in embodiments of this application. For example, the first PO among the one or more POs associated with the first detection occasion or the first sequence may be used as the target PO. Alternatively, the last PO among the one or more POs associated with the first detection occasion or the first sequence may be used as the target PO, and so on.

In embodiments of this application, a manner of determining the reference point for the time domain location of the first detection occasion is not limited, and the reference point may be determined based on a time domain location in which any PO among the one or more POs associated with the first detection occasion or the first sequence is located. For example, the reference point may be a starting point of a frame in which the first PO among the one or more POs associated with the first detection occasion or the first sequence is located, or a starting point of a frame obtained by shifting, by the third offset, from the starting point of the frame in which the first PO is located. Alternatively, the reference point may be an end point of a frame in which the first PO among the one or more POs associated with the first detection occasion or the first sequence is located, or an end point of a frame obtained by shifting, by the third offset, from the end point of the frame in which the first PO is located. Alternatively, the reference point may be a starting point of a frame in which the last PO among the one or more POs associated with the first detection occasion or the first sequence is located, or a starting point of a frame obtained by shifting, by the third offset, from the starting point of the frame in which the last PO is located, or the like.

In a possible implementation, first, a first shift may be performed on a starting point of a PF in which the first PO among the one or more POs associated with the first detection occasion or the first sequence is located, where an offset of the first shift is the third offset (that is, a frame-level offset), a PF subjected to the shift is used as a reference frame, and a starting point of the reference frame is used as the reference point. Then, the time domain location of the first detection occasion, for example, the first signal detection occasion within the first detection occasion, may be determined based on the reference point and the fourth offset (that is, a symbol-level offset).

In some embodiments, by configuring different third offsets and/or fourth offsets, the first detection occasion may be located before the POs associated with the first detection occasion, after the POs associated with the first detection occasion, or in a same time domain location as the POs associated with the first detection occasion, thereby flexibly configuring the transmission location of the first signal.

In some embodiments, the network device providing the alert message to a terminal device (for example, the first terminal device) by using the first channel or the first signal is determined based on a capability of the terminal device.

In some embodiments, the terminal device may report capability information to the network device to indicate that the terminal device can support receiving alert messages. Accordingly, the network device may provide the alert message to the terminal device by using the first channel or the first signal. For example, in some embodiments, before the terminal device receives the first channel or the first signal transmitted by the network device, the method in embodiments of this application may further include the following step: transmitting, by the terminal device, first capability information to the network device, where the first capability information is used to indicate that the terminal device supports receiving the alert message.

For example, after the terminal device transmits the first capability information to the network device, the network device may provide the alert message to the terminal device by using the first channel, and instruct, using the first information field or the second information field, the terminal device whether to report the alert message to a higher layer of the terminal device. Alternatively, after the terminal device transmits the first capability information to the network device, the network device may provide the alert message to the terminal device by using the first signal, and instruct, using the first sequence, the terminal device whether to report the alert message to a higher layer of the terminal device.

The method embodiments of this application are described above in detail with reference to FIG. 1 to FIG. 11. Apparatus embodiments of this application are described below in detail with reference to FIG. 12 to FIG. 14. It should be understood that the descriptions of the method embodiments correspond to descriptions of the apparatus embodiments, and therefore, for parts that are not described in detail, reference may be made to the foregoing method embodiments.

FIG. 12 is a schematic structural diagram of a terminal device according to an embodiment of this application. The terminal device 1200 in FIG. 12 may be any of the foregoing first terminal devices. The terminal device 1200 may include a first receiving module 1210.

The first receiving module 1210 may be configured to receive a first channel or a first signal transmitted by a network device, the first channel or the first signal being used to provide an alert message.

Optionally, the first channel is a PDCCH used for scheduling a data channel.

Optionally, the first channel includes a first information field, the first information field is used to indicate first information, and the first information is used to instruct a physical layer of the first terminal device whether to report the alert message to a higher layer of the first terminal device.

Optionally, the first information field includes one or more bits, and each of the one or more bits corresponds to one terminal device group, and is used to instruct a physical layer of each terminal device in the one terminal device group whether to report the alert message to a higher layer of the terminal device.

Optionally, the first information field includes one or more bits, the one or more bits correspond to one terminal device group, and the one or more bits are used to instruct a physical layer of each terminal device in the one terminal device group whether to report the alert message to a higher layer of the terminal device.

Optionally, the terminal device further includes a first reporting module 1220, and the first reporting module is configured to: in a case that the first terminal device belongs to a first terminal device group, and the first information instructs a physical layer of each terminal device in the first terminal device group to report the alert message to a higher layer of the terminal device, report, by the physical layer of the first terminal device, the alert message to the higher layer of the first terminal device; and/or in a case that the first terminal device belongs to a first terminal device group, and the first information instructs a physical layer of each terminal device in the first terminal device group not to report the alert message to a higher layer of the terminal device, skip reporting, by the physical layer of the first terminal device, the alert message to the higher layer of the first terminal device.

Optionally, the data channel carries a paging message and/or a system message.

Optionally, the first channel is a dedicated channel used for carrying the alert message.

Optionally, the first channel is a PDCCH including a first DCI format, and the first DCI format is used to provide the alert message.

Optionally, the first DCI format is associated with one or more POs, and the first DCI format is used to provide the alert message to one or more terminal devices corresponding to the one or more POs.

Optionally, the first DCI format includes a second information field, the second information field is used to indicate first information, and the first information is used to instruct a physical layer of the first terminal device whether to report the alert message to a higher layer of the first terminal device.

Optionally, the second information field includes one or more bits, and each of the one or more bits corresponds to one terminal device group, and is used to instruct a physical layer of each terminal device in the one terminal device group whether to report the alert message to a higher layer of the terminal device.

Optionally, the second information field includes one or more bits, the one or more bits correspond to one terminal device group, and the one or more bits are used to instruct a physical layer of each terminal device in the one terminal device group whether to report the alert message to a higher layer of the terminal device.

Optionally, the terminal device further includes a second reporting module, and the second reporting module is configured to: in a case that the first terminal device belongs to a first terminal device group, and the first information instructs a physical layer of each terminal device in the first terminal device group to report the alert message to a higher layer of the terminal device, report, by the physical layer of the first terminal device, the alert message to the higher layer of the first terminal device; and/or in a case that the first terminal device belongs to a first terminal device group, and the first information is used to instruct a physical layer of each terminal device in the first terminal device group not to report the alert message to a higher layer of the terminal device, skip reporting, by the physical layer of the first terminal device, the alert message to the higher layer of the first terminal device.

Optionally, the first channel is scrambled with a first RNTI, and the first RNTI is a PEI-RNTI or a dedicated RNTI for the alert message.

Optionally, the terminal device further includes: a monitoring module, configured to monitor the first channel in a first occasion, where one DRX cycle of the first terminal device includes one or more first occasions.

Optionally, a time domain location of the first occasion is determined based on one or more of the following: a time domain location in which one PO among one or more POs associated with the first occasion is located; a first offset, where the first offset is a frame-level offset; or a second offset, where the second offset is a symbol-level offset.

Optionally, the first signal includes a first sequence, and the first sequence is used to instruct a physical layer of the first terminal device whether to report the alert message to a higher layer of the first terminal device.

Optionally, the first sequence includes one or more values, and each of the one or more values corresponds to a plurality of terminal device groups, and is used to instruct a physical layer of each terminal device in the plurality of terminal device groups whether to report the alert message to a higher layer of the terminal device.

Optionally, the first sequence includes one or more values, and each of the one or more values corresponds to one terminal device group, and is used to instruct a physical layer of each terminal device in the one terminal device group whether to report the alert message to a higher layer of the terminal device.

Optionally, the terminal device further includes a third reporting module, and the third reporting module is configured to: in a case that the first terminal device belongs to a first terminal device group, and the first sequence instructs a physical layer of each terminal device in the first terminal device group to report the alert message to a higher layer of the terminal device, report, by the physical layer of the first terminal device, the alert message to the higher layer of the first terminal device; and/or in a case that the first terminal device belongs to a first terminal device group, and the first sequence instructs a physical layer of each terminal device in the first terminal device group not to report the alert message to a higher layer of the terminal device, skip reporting, by the physical layer of the first terminal device, the alert message to the higher layer of the first terminal device.

Optionally, the terminal device further includes: a detection module, configured to detect the first signal in a first detection occasion, where one DRX cycle of the first terminal device includes one or more first detection occasions.

Optionally, a time domain location of the first detection occasion is determined based on one or more of the following: a time domain location in which one PO among one or more POs associated with the first detection occasion is located; a third offset, where the third offset is a frame-level offset; or a fourth offset, where the fourth offset is a symbol-level offset.

Optionally, the terminal device further includes: a transmitting module, configured to transmit first capability information to the network device, where the first capability information is used to indicate that the first terminal device supports receiving the alert message; and/or a second receiving module, configured to receive first configuration information transmitted by the network device, where the first configuration information is used to configure the first terminal device such that the first terminal device receives the alert message.

Optionally, the alert message is used for one or more of the following: instructing the first terminal device to move; instructing the first terminal device to move from a first location to a second location, where signal reception quality of the first terminal device at the second location is higher than signal reception quality of the first terminal device at the first location; or indicating that current signal reception quality of the first terminal device is poor.

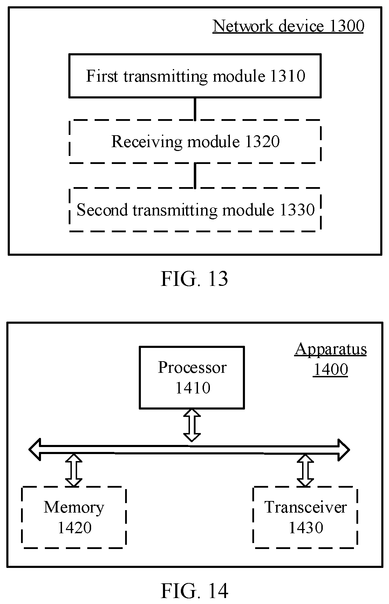

Optionally, the first receiving module 1210 may be a transceiver 1430. The terminal device 1200 may further include a processor 1410 and a memory 1420, as shown in FIG. 14.

FIG. 13 is a schematic structural diagram of a network device according to an embodiment of this application. The network device 1300 shown in FIG. 13 may include a first transmitting module 1310.

The first transmitting module 1310 may be configured to transmit a first channel or a first signal to a first terminal device, the first channel or the first signal being used to provide an alert message.

Optionally, the first channel is a PDCCH used for scheduling a data channel.

Optionally, the first channel includes a first information field, the first information field is used to indicate first information, and the first information is used to instruct a physical layer of the first terminal device whether to report the alert message to a higher layer of the first terminal device.

Optionally, the first information field includes one or more bits, and each of the one or more bits corresponds to one terminal device group, and is used to instruct a physical layer of each terminal device in the one terminal device group whether to report the alert message to a higher layer of the terminal device.

Optionally, the first information field includes one or more bits, the one or more bits correspond to one terminal device group, and the one or more bits are used to instruct a physical layer of each terminal device in the one terminal device group whether to report the alert message to a higher layer of the terminal device.

Optionally, the data channel carries a paging message and/or a system message.

Optionally, the first channel is a dedicated channel used for carrying the alert message.

Optionally, the first channel is a PDCCH including a first DCI format, and the first DCI format is used to provide the alert message.

Optionally, the first DCI format is associated with one or more POs, and the first DCI format is used to provide the alert message to one or more terminal devices corresponding to the one or more POs.

Optionally, the first DCI format includes a second information field, the second information field is used to indicate first information, and the first information is used to instruct a physical layer of the first terminal device whether to report the alert message to a higher layer of the first terminal device.

Optionally, the second information field includes one or more bits, and each of the one or more bits corresponds to one terminal device group, and is used to instruct a physical layer of each terminal device in the one terminal device group whether to report the alert message to a higher layer of the terminal device.

Optionally, the second information field includes one or more bits, the one or more bits correspond to one terminal device group, and the one or more bits are used to instruct a physical layer of each terminal device in the one terminal device group whether to report the alert message to a higher layer of the terminal device.

Optionally, the first channel is scrambled with a first RNTI, and the first RNTI is a PEI-RNTI or a dedicated RNTI for the alert message.

Optionally, the first channel is monitored in a first occasion, and one DRX cycle of the first terminal device includes one or more first occasions.

Optionally, a time domain location of the first monitoring occasion is determined based on one or more of the following: a time domain location in which one PO among one or more POs associated with the first occasion is located; a first offset, where the first offset is a frame-level offset; or a second offset, where the second offset is a symbol-level offset.

Optionally, the first signal includes a first sequence, and the first sequence is used to instruct a physical layer of the first terminal device whether to or report the alert message to a higher layer of the first terminal device.

Optionally, the first sequence includes one or more values, and each of the one or more values corresponds to a plurality of terminal device groups, and is used to instruct a physical layer of each terminal device in the plurality of terminal device groups whether to report the alert message to a higher layer of the terminal device.

Optionally, the first sequence includes one or more values, and each of the one or more values corresponds to one terminal device group, and is used to instruct a physical layer of each terminal device in the one terminal device group whether to report the alert message to a higher layer of the terminal device.

Optionally, the first signal is monitored in a first detection occasion, and one DRX cycle of the first terminal device includes one or more first detection occasions.

Optionally, a time domain location of the first detection occasion is determined based on one or more of the following: a time domain location in which one PO among one or more POs associated with the first detection occasion is located; a third offset, where the third offset is a frame-level offset; or a fourth offset, where the fourth offset is a symbol-level offset.

Optionally, the network device further includes: a receiving module 1320, configured to receive first capability information transmitted by the first terminal device, where the first capability information is used to indicate that the first terminal device supports receiving the alert message; and/or a second transmitting module 1330, configured to transmit first configuration information to the first terminal device, where the first configuration information is used to configure the first terminal device such that the first terminal device receives the alert message.

Optionally, the alert message is used for one or more of the following: instructing the first terminal device to move; instructing the first terminal device to move from a first location to a second location, where signal reception quality of the first terminal device at the second location is higher than signal reception quality of the first terminal device at the first location; or indicating that current signal reception quality of the first terminal device is poor.

Optionally, the first transmitting module 1310 may be a transceiver 1430. The network device 1300 may further include the processor 1410 and the memory 1420, as shown in FIG. 14.

FIG. 14 is a schematic structural diagram of a communications apparatus according to an embodiment of this application. Dashed lines in FIG. 14 indicate that a unit or module is optional. The apparatus 1400 may be configured to implement the methods described in the foregoing method embodiments. The apparatus 1400 may be a chip, a terminal device, or a network device.

The apparatus 1400 may include one or more processors 1410. The processor 1410 may support the apparatus 1400 in implementing the methods described in the foregoing method embodiments. The processor 1410 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1400 may further include one or more memories 1420. The memory 1420 stores a program that may be executed by the processor 1410 to cause the processor 1410 to perform the methods described in the foregoing method embodiments. The memory 1420 may be separated from or integrated into the processor 1410.

The apparatus 1400 may further include a transceiver 1430. The processor 1410 may communicate with another device or chip through the transceiver 1430. For example, the processor 1410 may transmit data to and receive data from another device or chip through the transceiver 1430.

An embodiment of this application further provides a computer-readable storage medium for storing a program. The computer-readable storage medium may be applied to the terminal device or the network device provided in embodiments of this application, and the program causes a computer to execute the method executed by the terminal device or the network device in embodiments of this application.

An embodiment of this application further provides a computer program product. The computer program product includes a program. The computer program product may be applied to the terminal device or the network device provided in the embodiments of this application, and the program causes a computer to execute the methods performed by the terminal device or the network device in various embodiments of this application.

An embodiment of this application further provides a computer program. The computer program may be applied to the terminal device or the network device provided in the embodiments of this application, and the computer program causes a computer to execute the methods performed by the terminal device or the network device in various embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, A indicates B, which may mean that A directly indicates B, for example, B may be obtained by means of A; or may mean that A indirectly indicates B, for example, A indicates C, and B may be obtained by means of C; or may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, the "include" may refer to direct inclusion, or may refer to indirect inclusion. Optionally, the term "include" mentioned in embodiments of this application may be replaced with "indicate" or "be used to determine". For example, A including B may be replaced with that A indicates B, or A is used to determine B.

In embodiments of this application, "predefining" or "pre-configuring" may be implemented by pre-storing corresponding code, tables, or other forms that may be used to indicate related information in devices (for example, including a terminal device and a network device), and a specific implementation thereof is not limited in this application. For example, being predefined may refer to being defined in a protocol.

In embodiments of this application, the "protocol" may refer to a standard protocol in the communications field, and may include, for example, an LTE protocol, an NR protocol, and a related protocol applied to a future communications system, which is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in the specification generally indicates an "or" relationship between the associated objects.

In embodiments of this application, sequence numbers of the foregoing processes do not mean execution orders. The execution orders of the processes should be determined based on functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state drive, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A wireless communication method, comprising:
    receiving, by a first terminal device, a first channel or a first signal transmitted by a network device, the first channel or the first signal being used to provide an alert message.

2.  The method according to claim 1, wherein the first channel is a PDCCH used for scheduling a data channel.

3.  The method according to claim 2, wherein the first channel comprises a first information field, the first information field is used to indicate first information, and the first information is used to instruct a physical layer of the first terminal device whether to report the alert message to a higher layer of the first terminal device.

4.  The method according to claim 3, wherein the first information field comprises one or more bits, and each of the one or more bits corresponds to one terminal device group, and is used to instruct a physical layer of each terminal device in the one terminal device group whether to report the alert message to a higher layer of the terminal device.

5.  The method according to claim 3, wherein the first information field comprises one or more bits, the one or more bits correspond to one terminal device group, and the one or more bits are used to instruct a physical layer of each terminal device in the one terminal device group whether to report the alert message to a higher layer of the terminal device.

6.  The method according to any one of claims 3 to 5, wherein the method further comprises:

    in a case that the first terminal device belongs to a first terminal device group, and the first information instructs a physical layer of each terminal device in the first terminal device group to report the alert message to a higher layer of the terminal device, reporting, by the physical layer of the first terminal device, the alert message to the higher layer of the first terminal device; and/or
    in a case that the first terminal device belongs to a first terminal device group, and the first information instructs a physical layer of each terminal device in the first terminal device group not to report the alert message to a higher layer of the terminal device, skipping reporting, by the physical layer of the first terminal device, the alert message to the higher layer of the first terminal device.

7.  The method according to any one of claims 2 to 6, wherein the data channel carries a paging message and/or a system message.

8.  The method according to claim 1, wherein the first channel is a dedicated channel used for carrying the alert message.

9.  The method according to claim 8, wherein the first channel is a PDCCH comprising a first DCI format, and the first DCI format is used to provide the alert message.

10. The method according to claim 9, wherein the first DCI format is associated with one or more POs, and the first DCI format is used to provide the alert message to one or more terminal devices corresponding to the one or more POs.

11. The method according to claim 9 or 10, wherein the first DCI format comprises a second information field, the second information field is used to indicate first information, and the first information is used to instruct a physical layer of the first terminal device whether to report the alert message to a higher layer of the first terminal device.

12. The method according to claim 11, wherein the second information field comprises one or more bits, and each of the one or more bits corresponds to one terminal device group, and is used to instruct a physical layer of each terminal device in the one terminal device group whether to report the alert message to a higher layer of the terminal device.

13. The method according to claim 11, wherein the second information field comprises one or more bits, the one or more bits correspond to one terminal device group, and the one or more bits are used to instruct a physical layer of each terminal device in the one terminal device group to whether to report the alert message to a higher layer of the terminal device.

14. The method according to any one of claims 11 to 13, wherein the method further comprises:

in a case that the first terminal device belongs to a first terminal device group, and the first information instructs a physical layer of each terminal device in the first terminal device group to report the alert message to a higher layer of the terminal device, reporting, by the physical layer of the first terminal device, the alert message to the higher layer of the first terminal device; and/or
in a case that the first terminal device belongs to a first terminal device group, and the first information is used to instruct a physical layer of each terminal device in the first terminal device group not to report the alert message to a higher layer of the terminal device, skipping reporting, by the physical layer of the first terminal device, the alert message to the higher layer of the first terminal device.

15. The method according to any one of claims 8 to 14, wherein the first channel is scrambled with a first RNTI, and the first RNTI is a PEI-RNTI or a dedicated RNTI for the alert message.

16. The method according to any one of claims 8 to 15, wherein the method further comprises:
monitoring, by the first terminal device, the first channel in a first occasion, wherein one DRX cycle of the first terminal device comprises one or more first occasions.

17. The method according to claim 16, wherein a time domain location of the first occasion is determined based on one or more of following:

a time domain location in which one PO among one or more POs associated with the first occasion is located;
a first offset, wherein the first offset is a frame-level offset; or
a second offset, wherein the second offset is a symbol-level offset.

18. The method according to claim 1, wherein the first signal comprises a first sequence, and the first sequence is used to instruct a physical layer of the first terminal device whether to report the alert message to a higher layer of the first terminal device.

19. The method according to claim 18, wherein the first sequence comprises one or more values, and each of the one or more values corresponds to a plurality of terminal device groups, and is used to instruct a physical layer of each terminal device in the plurality of terminal device groups whether to report the alert message to a higher layer of the terminal device.

20. The method according to claim 18, wherein the first sequence comprises one or more values, and each of the one or more values corresponds to one terminal device group, and is used to instruct a physical layer of each terminal device in the one terminal device group whether to report the alert message to a higher layer of the terminal device.

21. The method according to any one of claims 18 to 20, wherein the method further comprises:

in a case that the first terminal device belongs to a first terminal device group, and the first sequence instructs a physical layer of each terminal device in the first terminal device group to report the alert message to a higher layer of the terminal device, reporting, by the physical layer of the first terminal device, the alert message to the higher layer of the first terminal device; and/or
in a case that the first terminal device belongs to a first terminal device group, and the first sequence instructs a physical layer of each terminal device in the first terminal device group not to report the alert message to a higher layer of the terminal device, skipping reporting, by the physical layer of the first terminal device, the alert message to the higher layer of the first terminal device.

22. The method according to any one of claims 18 to 21, wherein the method further comprises:

detecting, by the first terminal device, the first signal in a first detection occasion, wherein one DRX cycle of the first terminal device comprises one or more first detection occasions.

23. The method according to claim 22, wherein a time domain location of the first detection occasion is determined based on one or more of following:

a time domain location in which one PO among one or more POs associated with the first detection occasion is located;
a third offset, wherein the third offset is a frame-level offset; or
a fourth offset, wherein the fourth offset is a symbol-level offset.

24. The method according to any one of claims 1 to 23, wherein before the receiving, by the first terminal device, the first channel or the first signal transmitted by the network device, the method further comprises:

transmitting, by the first terminal device, first capability information to the network device, wherein the first capability information is used to indicate that the first terminal device supports receiving the alert message; and/or
receiving, by the first terminal device, first configuration information transmitted by the network device, wherein the first configuration information is used to configure the first terminal device such that the first terminal device receives the alert message.

25. The method according to any one of claims 1 to 24, wherein the alert message is used for one or more of following:

instructing the first terminal device to move;
instructing the first terminal device to move from a first location to a second location, wherein signal reception quality of the first terminal device at the second location is higher than signal reception quality of the first terminal device at the first location; or
indicating that current signal reception quality of the first terminal device is poor.

26. A wireless communication method, comprising:
transmitting, by a network device, a first channel or a first signal to a first terminal device, the first channel or the first signal being used to provide an alert message.

27. The method according to claim 26, wherein the first channel is a PDCCH used for scheduling a data channel.

28. The method according to claim 27, wherein the first channel comprises a first information field, the first information field is used to indicate first information, and the first information is used to instruct a physical layer of the first terminal device whether to report the alert message to a higher layer of the first terminal device.

29. The method according to claim 28, wherein the first information field comprises one or more bits, and each of the one or more bits corresponds to one terminal device group, and is used to instruct a physical layer of each terminal device in the one terminal device group whether to report the alert message to a higher layer of the terminal device.

30. The method according to claim 28, wherein the first information field comprises one or more bits, the one or more bits correspond to one terminal device group, and the one or more bits are used to instruct a physical layer of each terminal device in the one terminal device group whether to report the alert message to a higher layer of the terminal device.

31. The method according to any one of claims 27 to 30, wherein the data channel carries a paging message and/or a system message.

32. The method according to claim 26, wherein the first channel is a dedicated channel used for carrying the alert message.

33. The method according to claim 32, wherein the first channel is a PDCCH comprising a first DCI format, and the first DCI format is used to provide the alert message.

34. The method according to claim 33, wherein the first DCI format is associated with one or more POs, and the first DCI format is used to provide the alert message to one or more terminal devices corresponding to the one or more POs.

35. The method according to claim 33 or 34, wherein the first DCI format comprises a second information field, the second information field is used to indicate first information, and the first information is used to instruct a physical layer of the first terminal device whether to report the alert message to a higher layer of the first terminal device.

36. The method according to claim 35, wherein the second information field comprises one or more bits, and each of the one or more bits corresponds to one terminal device group, and is used to instruct a physical layer of each terminal device in the one terminal device group whether to report the alert message to a higher layer of the terminal device.

37. The method according to claim 35, wherein the second information field comprises one or more bits, the one or more bits correspond to one terminal device group, and the one or more bits are used to instruct a physical layer of each terminal device in the one terminal device group whether to report the alert message to a higher layer of the terminal device.

38. The method according to any one of claims 32 to 37, wherein the first channel is scrambled with a first RNTI, and the first RNTI is a PEI-RNTI or a dedicated RNTI for the alert message.

39. The method according to any one of claims 32 to 38, wherein the first channel is monitored in a first occasion, and one DRX cycle of the first terminal device comprises one or more first occasions.

40. The method according to claim 39, wherein a time domain location of the first occasion is determined based on one or more of following:

a time domain location in which one PO among one or more POs associated with the first occasion is located;
a first offset, wherein the first offset is a frame-level offset; or
a second offset, wherein the second offset is a symbol-level offset.

41. The method according to claim 26, wherein the first signal comprises a first sequence, and the first sequence is used to instruct a physical layer of the first terminal device whether to report the alert message to a higher layer of the first terminal device.

42. The method according to claim 41, wherein the first sequence comprises one or more values, and each of the one or more values corresponds to a plurality of terminal device groups, and is used to instruct a physical layer of each terminal device in the plurality of terminal device groups whether to or report the alert message to a higher layer of the terminal device.

43. The method according to claim 41, wherein the first sequence comprises one or more values, and each of the one or more values corresponds to one terminal device group, and is used to instruct a physical layer of each terminal device in the one terminal device group whether to report the alert message to a higher layer of the terminal device.

44. The method according to any one of claims 41 to 43, wherein the first signal is monitored in a first detection occasion, and one DRX cycle of the first terminal device comprises one or more first detection occasions.

45. The method according to claim 44, wherein a time domain location of the first detection occasion is determined based on one or more of following:

a time domain location in which one PO among one or more POs associated with the first detection occasion is located;
a third offset, wherein the third offset is a frame-level offset; or
a fourth offset, wherein the fourth offset is a symbol-level offset.

46. The method according to any one of claims 26 to 45, wherein before the transmitting, by the network device, the first channel or the first signal to the first terminal device, the method further comprises:

receiving, by the network device, first capability information transmitted by the first terminal device, wherein the first capability information is used to indicate that the first terminal device supports receiving the alert message; and/or
transmitting, by the network device, first configuration information to the first terminal device, wherein the first configuration information is used to configure the first terminal device such that the first terminal device receives the alert message.

47. The method according to any one of claims 26 to 46, wherein the alert message is used for one or more of following:

instructing the first terminal device to move;
instructing the first terminal device to move from a first location to a second location, wherein signal reception quality of the first terminal device at the second location is higher than signal reception quality of the first terminal device at the first location; or
indicating that current signal reception quality of the first terminal device is poor.

48. A terminal device, wherein the terminal device is a first terminal device, and the terminal device comprises:
a first receiving module, configured to receive a first channel or a first signal transmitted by a network device, the first channel or the first signal being used to provide an alert message.

49. The terminal device according to claim 48, wherein the first channel is a PDCCH used for scheduling a data channel.

50. The terminal device according to claim 49, wherein the first channel comprises a first information field, the first information field is used to indicate first information, and the first information is used to instruct a physical layer of the first terminal device whether to report the alert message to a higher layer of the first terminal device.

51. The terminal device according to claim 50, wherein the first information field comprises one or more bits, and each of the one or more bits corresponds to one terminal device group, and is used to instruct a physical layer of each terminal device in the one terminal device group whether to report the alert message to a higher layer of the terminal device.

52. The terminal device according to claim 50, wherein the first information field comprises one or more bits, the one or more bits correspond to one terminal device group, and the one or more bits are used to instruct a physical layer of each terminal device in the one terminal device group whether to report the alert message to a higher layer of the terminal device.

53. The terminal device according to any one of claims 50 to 52, wherein the terminal device further comprises a first reporting module, and the first reporting module is configured to:

in a case that the first terminal device belongs to a first terminal device group, and the first information instructs a physical layer of each terminal device in the first terminal device group to report the alert message to a higher layer of the terminal device, report, by the physical layer of the first terminal device, the alert message to the higher layer of the first terminal device; and/or
in a case that the first terminal device belongs to a first terminal device group, and the first information instructs a physical layer of each terminal device in the first terminal device group not to report the alert message to a higher layer of the terminal device, skip reporting, by the physical layer of the first terminal device, the alert message to the higher layer of the first terminal device.

54. The terminal device according to any one of claims 49 to 53, wherein the data channel carries a paging message and/or a system message.

55. The terminal device according to claim 48, wherein the first channel is a dedicated channel used for carrying the alert message.

56. The terminal device according to claim 55, wherein the first channel is a PDCCH comprising a first DCI format, and the first DCI format is used to provide the alert message.

57. The terminal device according to claim 56, wherein the first DCI format is associated with one or more POs, and the first DCI format is used to provide the alert message to one or more terminal devices corresponding to the one or more POs.

58. The terminal device according to claim 56 or 57, wherein the first DCI format comprises a second information field, the second information field is used to indicate first information, and the first information is used to instruct a physical layer of the first terminal device whether to report the alert message to a higher layer of the first terminal device.

59. The terminal device according to claim 58, wherein the second information field comprises one or more bits, and each of the one or more bits corresponds to one terminal device group, and is used to instruct a physical layer of each terminal device in the one terminal device group whether to report the alert message to a higher layer of the terminal device.

60. The terminal device according to claim 58, wherein the second information field comprises one or more bits, the one or more bits correspond to one terminal device group, and the one or more bits are used to instruct a physical layer of each terminal device in the one terminal device group whether to report the alert message to a higher layer of the terminal device.

61. The terminal device according to any one of claims 58 to 60, wherein the terminal device further comprises a second reporting module, and the second reporting module is configured to:

in a case that the first terminal device belongs to a first terminal device group, and the first information instructs a physical layer of each terminal device in the first terminal device group to report the alert message to a higher layer of the terminal device, report, by the physical layer of the first terminal device, the alert message to the higher layer of the first terminal device; and/or
in a case that the first terminal device belongs to a first terminal device group, and the first information is used to instruct a physical layer of each terminal device in the first terminal device group not to report the alert message to a higher layer of the terminal device, skip reporting, by the physical layer of the first terminal device, the alert message to the higher layer of the first terminal device.

62. The terminal device according to any one of claims 55 to 61, wherein the first channel is scrambled with a first RNTI, and the first RNTI is a PEI-RNTI or a dedicated RNTI for the alert message.

63. The terminal device according to any one of claims 55 to 62, wherein the terminal device further comprises:
a monitoring module, configured to monitor the first channel in a first occasion, wherein one DRX cycle of the first terminal device comprises one or more first occasions.

64. The terminal device according to claim 63, wherein a time domain location of the first occasion is determined based on one or more of following:

a time domain location in which one PO among one or more POs associated with the first occasion is located;
a first offset, wherein the first offset is a frame-level offset; or
a second offset, wherein the second offset is a symbol-level offset.

65. The terminal device according to claim 48, wherein the first signal comprises a first sequence, and the first sequence is used to instruct a physical layer of the first terminal device whether to report the alert message to a higher layer of the first terminal device.

66. The terminal device according to claim 65, wherein the first sequence comprises one or more values, and each of the one or more values corresponds to a plurality of terminal device groups, and is used to instruct a physical layer of each terminal device in the plurality of terminal device groups whether to report the alert message to a higher layer of the terminal device.

67. The terminal device according to claim 65, wherein the first sequence comprises one or more values, and each of the one or more values corresponds to one terminal device group, and is used to instruct a physical layer of each terminal device in the one terminal device group whether to report the alert message to a higher layer of the terminal device.

68. The terminal device according to any one of claims 65 to 67, wherein the terminal device further comprises a third reporting module, and the third reporting module is configured to:

in a case that the first terminal device belongs to a first terminal device group, and the first sequence instructs a physical layer of each terminal device in the first terminal device group to report the alert message to a higher layer of the terminal device, report, by the physical layer of the first terminal device, the alert message to the higher layer of the first terminal device; and/or
in a case that the first terminal device belongs to a first terminal device group, and the first sequence instructs a physical layer of each terminal device in the first terminal device group not to report the alert message to a higher layer of the terminal device, skip reporting, by the physical layer of the first terminal device, the alert message to the higher layer of the first terminal device.

69. The terminal device according to any one of claims 65 to 68, wherein the terminal device further comprises:
a detection module, configured to detect the first signal in a first detection occasion, wherein one DRX cycle of the first terminal device comprises one or more first detection occasions.

70. The terminal device according to claim 69, wherein a time domain location of the first detection occasion is determined based on one or more of following:

a time domain location in which one PO among one or more POs associated with the first detection occasion is located;
a third offset, wherein the third offset is a frame-level offset; or
a fourth offset, wherein the fourth offset is a symbol-level offset.

71. The terminal device according to any one of claims 48 to 70, wherein the terminal device further comprises:

a transmitting module, configured to transmit first capability information to the network device, wherein the first capability information is used to indicate that the first terminal device supports receiving the alert message; and/or
a second receiving module, configured to receive first configuration information transmitted by the network device, wherein the first configuration information is used to configure the first terminal device such that the first terminal device receives the alert message.

72. The terminal device according to any one of claims 48 to 71, wherein the alert message is used for one or more of following:

instructing the first terminal device to move;
instructing the first terminal device to move from a first location to a second location, wherein signal reception quality of the first terminal device at the second location is higher than signal reception quality of the first terminal device at the first location; or
indicating that current signal reception quality of the first terminal device is poor.

73. A network device, comprising:
a first transmitting module, configured to transmit a first channel or a first signal to a first terminal device, the first channel or the first signal being used to provide an alert message.

74. The network device according to claim 73, wherein the first channel is a PDCCH used for scheduling a data channel.

75. The network device according to claim 74, wherein the first channel comprises a first information field, the first information field is used to indicate first information, and the first information is used to instruct a physical layer of the first terminal device whether to report the alert message to a higher layer of the first terminal device.

76. The network device according to claim 75, wherein the first information field comprises one or more bits, and each of the one or more bits corresponds to one terminal device group, and is used to instruct a physical layer of each terminal device in the one terminal device group whether to report the alert message to a higher layer of the terminal device.

77. The network device according to claim 75, wherein the first information field comprises one or more bits, the one or more bits correspond to one terminal device group, and the one or more bits are used to instruct a physical layer of each terminal device in the one terminal device group whether to report the alert message to a higher layer of the terminal device.

78. The network device according to any one of claims 74 to 77, wherein the data channel carries a paging message and/or a system message.

79. The network device according to claim 73, wherein the first channel is a dedicated channel used for carrying the alert message.

80. The network device according to claim 79, wherein the first channel is a PDCCH comprising a first DCI format, and the first DCI format is used to provide the alert message.

81. The network device according to claim 80, wherein the first DCI format is associated with one or more POs, and the first DCI format is used to provide the alert message to one or more terminal devices corresponding to the one or more POs.

82. The network device according to claim 80 or 81, wherein the first DCI format comprises a second information field, the second information field is used to indicate first information, and the first information is used to instruct a physical layer of the first terminal device whether to report the alert message to a higher layer of the first terminal device.

83. The network device according to claim 82, wherein the second information field comprises one or more bits, and each of the one or more bits corresponds to one terminal device group, and is used to instruct a physical layer of each terminal device in the one terminal device group whether to report the alert message to a higher layer of the terminal device.

84. The network device according to claim 82, wherein the second information field comprises one or more bits, the one or more bits correspond to one terminal device group, and the one or more bits are used to instruct a physical layer of each terminal device in the one terminal device group whether to report the alert message to a higher layer of the terminal device.

85. The network device according to any one of claims 79 to 84, wherein the first channel is scrambled with a first RNTI, and the first RNTI is a PEI-RNTI or a dedicated RNTI for the alert message.

86. The network device according to any one of claims 79 to 85, wherein the first channel is monitored in a first occasion, and one DRX cycle of the first terminal device comprises one or more first occasions.

87. The network device according to claim 86, wherein a time domain location of the first occasion is determined based on one or more of following:

a time domain location in which one PO among one or more POs associated with the first occasion is located;
a first offset, wherein the first offset is a frame-level offset; or
a second offset, wherein the second offset is a symbol-level offset.

88. The network device according to claim 73, wherein the first signal comprises a first sequence, and the first sequence is used to instruct a physical layer of the first terminal device whether to report the alert message to a higher layer of the first terminal device.

89. The network device according to claim 88, wherein the first sequence comprises one or more values, and each of the one or more values corresponds to a plurality of terminal device groups, and is used to instruct a physical layer of each terminal device in the plurality of terminal device groups whether to report the alert message to a higher layer of the terminal device.

90. The network device according to claim 88, wherein the first sequence comprises one or more values, and each of the one or more values corresponds to one terminal device group, and is used to instruct a physical layer of each terminal device in the one terminal device group whether to report the alert message to a higher layer of the terminal device.

91. The network device according to any one of claims 88 to 90, wherein the first signal is monitored in a first detection occasion, and one DRX cycle of the first terminal device comprises one or more first detection occasions.

92. The network device according to claim 91, wherein a time domain location of the first detection occasion is determined based on one or more of following:

a time domain location in which one PO among one or more POs associated with the first detection occasion is located;
a third offset, wherein the third offset is a frame-level offset; or
a fourth offset, wherein the fourth offset is a symbol-level offset.

93. The network device according to any one of claims 73 to 92, wherein the network device further comprises:

a receiving module, configured to receive first capability information transmitted by the first terminal device, wherein the first capability information is used to indicate that the first terminal device supports receiving the alert message; and/or

a second transmitting module, configured to transmit first configuration information to the first terminal device, wherein the first configuration information is used to configure the first terminal device such that the first terminal device receives the alert message.

94. The network device according to any one of claims 73 to 93, wherein the alert message is used for one or more of following:

instructing the first terminal device to move;

instructing the first terminal device to move from a first location to a second location, wherein signal reception quality of the first terminal device at the second location is higher than signal reception quality of the first terminal device at the first location; or

indicating that current signal reception quality of the first terminal device is poor.

95. A terminal device, wherein the terminal device is a first terminal device, the terminal device comprises a transceiver, a memory, and a processor, the memory is configured to store a program, and the processor is configured to invoke the program in the memory, to cause the terminal device to execute the method according to any one of claims 1 to 25.

96. A network device, comprising a transceiver, a memory, and a processor, wherein the memory is configured to store a program, and the processor is configured to invoke the program in the memory to cause the network device to execute the method according to any one of claims 26 to 47.

97. An apparatus, comprising a processor configured to invoke a program from a memory, to cause the apparatus to execute the method according to any one of claims 1 to 47.

98. A chip, comprising a processor, configured to invoke a program from a memory to cause a device installed with the chip to execute the method according to any one of claims 1 to 47.

99. A computer-readable storage medium, wherein the computer-readable storage medium stores a program, and the program causes a computer to execute the method according to any one of claims 1 to 47.

100.
A computer program product, comprising a program that causes a computer to execute the method according to any one of claims 1 to 47.

101.
A computer program, wherein the computer program causes a computer to execute the method according to any one of claims 1 to 47.

FIG. 1A

FIG. 1B

FIG. 1C

DRX cycle

...

◨ indicates a location of a PF in a DRX cycle

▨ indicates a location of a PO in a PF

FIG. 2

Network device

First terminal device

S310: First channel or first signal

FIG. 3

Network device

First terminal device

S410: First channel

S420: Fail to receive a data channel

S430: A physical layer reports an alert message to a higher layer

FIG. 4

```
┌──────────────┐                    ┌──────────────────────┐
│   Network    │                    │  First terminal device│
│   device     │                    │                      │
└──────┬───────┘                    └───────────┬──────────┘
       │        S510: First channel             │
       ├───────────────────────────────────────>│
       │   ┌────────────────────────────────────┴──┐
       │   │  S520: Fail to receive a data channel  │
       │   └────────────────────────────────────┬──┘
       │   ┌────────────────────────────────────┴──┐
       │   │ S530: Determine a value of a bit,      │
       │   │ corresponding to a terminal device     │
       │   │ group to which the first terminal      │
       │   │ device belongs, in a first information  │
       │   │ field                                  │
       │   └────────────────────────────────────┬──┘
       │   ┌────────────────────────────────────┴──┐
       │   │ S540: Determine, based on the value of  │
       │   │ the bit, corresponding to the terminal  │
       │   │ device group to which the first terminal│
       │   │ device belongs, in the first information │
       │   │ field, whether to report an alert       │
       │   │ message to a higher layer              │
       │   └────────────────────────────────────┬──┘
```

FIG. 5

```
┌──────────────┐                    ┌──────────────────────┐
│   Network    │                    │  First terminal device│
│   device     │                    │                      │
└──────┬───────┘                    └───────────┬──────────┘
       │        S610: First channel             │
       ├───────────────────────────────────────>│
       │   ┌────────────────────────────────────┴──┐
       │   │  S620: Fail to receive a data channel  │
       │   └────────────────────────────────────┬──┘
       │   ┌────────────────────────────────────┴──┐
       │   │ S630: Determine an index of a terminal │
       │   │ device group indicated by a first      │
       │   │ information field                      │
       │   └────────────────────────────────────┬──┘
       │   ┌────────────────────────────────────┴──┐
       │   │ S640: Determine, based on the index of │
       │   │ the terminal device group indicated by  │
       │   │ the first information field, whether to  │
       │   │ report an alert message to a higher     │
       │   │ layer                                  │
       │   └────────────────────────────────────┬──┘
```

FIG. 6

| Fail to receive a paging message/system message | S710 |

| Determine a value of a bit, corresponding to a terminal device group to which a first terminal device belongs, in a second information field | S720 |

| Determine, based on the value of the bit, corresponding to the terminal device group to which the first terminal device belongs, whether to report an alert message to a higher layer | S730 |

FIG. 7

| Fail to receive a paging message/system message | S810 |

| Determine an index of a terminal device group indicated by a second information field | S820 |

| Determine, based on the index of the terminal device group indicated by the second information field, whether to report an alert message to a higher layer | S830 |

FIG. 8

$$N_{PO}^{ALT} = 4$$

Paging frame

Reference frame

PO 0   PO 1      PO 2   PO 3

Alert occasion

First offset

Second offset

FIG. 9

| Fail to receive a paging message/system message | S1010 |

| Determine first indication information that is for a terminal device group and indicated by a first sequence | S1020 |

| Determine, based on the first indication information that is for the terminal device group and indicated by the first sequence, whether to report an alert message to a higher layer | S1030 |

FIG. 10

| Fail to receive a paging message/system message | S1110 |

| Determine an index of a terminal device group indicated by a first sequence | S1120 |

| Determine, based on the index of the terminal device group indicated by the first sequence, whether to report an alert message to a higher layer | S1130 |

FIG. 11

Terminal device 1200

First receiving module 1210

First reporting module 1220

FIG. 12

Network device 1300

First transmitting module 1310

Receiving module 1320

Second transmitting module 1330

FIG. 13

Apparatus 1400

Processor 1410

Memory 1420

Transceiver 1430

FIG. 14

## INTERNATIONAL SEARCH REPORT

| | International application No. |
|---|---|
| | **PCT/CN2023/116823** |

### A. CLASSIFICATION OF SUBJECT MATTER

H04W 68/02(2009.01)i

According to International Patent Classification (IPC) or to both national classification and IPC

### B. FIELDS SEARCHED

Minimum documentation searched (classification system followed by classification symbols)

IPC:H04W,H04Q,H04B

Documentation searched other than minimum documentation to the extent that such documents are included in the fields searched

Electronic data base consulted during the international search (name of data base and, where practicable, search terms used)

CNTXT; WPABS; ENTXT; CJFD; DWPI; 3GPP; VEN; CNKI: 非地面通信网络, 寻呼, 接收质量, non terrestrial network, NTN, paging, DRX, SNR

### C. DOCUMENTS CONSIDERED TO BE RELEVANT

| Category* | Citation of document, with indication, where appropriate, of the relevant passages | Relevant to claim No. |
|---|---|---|
| Y | CN 113518471 A (HUAWEI TECHNOLOGIES CO., LTD.) 19 October 2021 (2021-10-19) description, paragraphs 139-343 | 1, 2, 7, 26, 27, 31, 48, 49, 54, 73, 74, 78, 95-101 |
| Y | CN 115989701 A (HUAWEI TECHNOLOGIES CO., LTD.) 18 April 2023 (2023-04-18) description, paragraphs 81-334 | 1, 2, 7, 26, 27, 31, 48, 49, 54, 73, 74, 78, 95-101 |
| A | CN 115315995 A (QUECTEL WIRELESS SOLUTIONS CO., LTD.) 08 November 2022 (2022-11-08) entire document | 1-101 |
| A | ZTE, Sanechips. "R1-1909980 'Considerations on additional PDCCH monitoring occasions for paging for NR-U"" *3GPP tsg_ran\wg1_rl1*, No. tsgr1_98b, 07 October 2019 (2019-10-07), entire document | 1-101 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **24 May 2024** | **24 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/116823**

| Patent document cited in search report | | | Publication date (day/month/year) | Patent family member(s) | | | Publication date (day/month/year) |
|---|---|---|---|---|---|---|---|
| CN | 113518471 | A | 19 October 2021 | None | | | |
| CN | 115989701 | A | 18 April 2023 | WO | 2022067828 | A1 | 07 April 2022 |
| CN | 115315995 | A | 08 November 2022 | None | | | |

Form PCT/ISA/210 (patent family annex) (July 2022)